# EUROPEAN PATENT SPECIFICATION

(11) **EP 3 496 314 B1**
(45) Date of publication and mention of the grant of the patent: **14.10.2020**
(21) Application number: 16914578.6
(22) Date of filing: 31.08.2016
(51) Int. Cl.: H04L 1/16, H04L 1/18

(54) **METHOD FOR ACK/NACK FEEDBACK UNDER UNLICENSED FREQUENCY SPECTRUM, AND RELEVANT DEVICE**
VERFAHREN ZUR ACK/NACK-RÜCKKOPPLUNG UNTER UNLIZENZIERTEM FREQUENZSPEKTRUM UND ZUGEHÖRIGE VORRICHTUNG
PROCÉDÉ DE RÉTROACTION ACK/NACK SOUS SPECTRE DE FRÉQUENCES HORS LICENCE, ET DISPOSITIF APPARENTÉ

(43) Date of publication of application: 12.06.2019
(73) Proprietor: Huawei Technologies Co., Ltd., Longgang District Shenzhen, Guangdong 518129 (CN)
(72) Inventor: YU, Haifeng, Shenzhen Guangdong 518129 (CN); YU, Feng, Shenzhen Guangdong 518129 (CN); ZHANG, Tao, Shenzhen Guangdong 518129 (CN); YU, Guangwei, Shenzhen Guangdong 518129 (CN)
(74) Representative: Gill Jennings & Every LLP
(86) International application number: PCT/CN2016/097650
(87) International publication number: WO 2018/040012

(56) References cited:
- WO-A1-2016/065620
- CN-A- 105 187 173
- US-A1- 2015 295 691
- US-A1- 2015 305 041
- NOKIA NETWORKS: "On the DL control channel limitations for up to 32 component carriers", 3GPP DRAFT; R1-152008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150420 - 20150424 19 April 2015 (2015-04-19), XP050934857, Retrieved from the Internet: URL:http://www.3gpp.org/ftp/Meetings_3GPP_ SYNC/RAN1/Docs/ [retrieved on 2015-04-19]
- ALCATEL-LUCENT SHANGHAI BELL ET AL: "Downlink control signaling in LAA", 3GPP DRAFT; R1-157017 LAA DOWNLINK CONTROL SIGNALING - FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 7 November 2015 (2015-11-07), XP051042125, Retrieved from the Internet: URL:http://www.3gpp.org/ftp/tsg_ran/WG1_RL 1/TSGR1_83/Docs/ [retrieved on 2015-11-07]
- ERICSSON: "NB-IoT-UL HARQ", 3GPP TSG-RAN WG1 NB-IOT Ad-Hoc, Rl-160086, 20 January 2016 (2016-01-20), XP051053407,
- HUAWEI et al.: "Timing Relationships", 3GPP TSG-RAN WG1 NB-IoT Ad-Hoc Meeting, Rl-160098, 20 January 2016 (2016-01-20), XP051053418,

## Description

### TECHNICAL FIELD

The present invention relates to the field of mobile communications technologies, and in particular, to an unlicensed spectrum ACK/NACK feedback method and related devices.

### BACKGROUND

A spectrum is used to implement wireless communication between communications devices, and the spectrum may be generally classified into two types: a licensed (Licensed) spectrum and an unlicensed (Unlicensed) spectrum. Currently, a private access technology represented by SigFox and LoRA and using an unlicensed spectrum below 1 GHz emerges, and gradually becomes a focus in the industry. Massive terminals may perform operation on the unlicensed spectrum in the future.

When using the unlicensed spectrum, a plurality of systems share an unlicensed frequency band, and therefore, mutual signal interference occurs between the plurality of systems. If the communications device uses the unlicensed spectrum to perform communication in a scheduling-based transmission manner, this may alleviate the mutual signal interference between the systems to an extent. However, the scheduling-based transmission manner is not applicable to all terminal devices. For a terminal device that is within a coverage area of a network device but is located far away from the network device, due to a relatively long distance and severe signal attenuation, the network device may need to send, by using a downlink channel, a scheduling instruction to the terminal device for a plurality of times, so that the terminal device learns a spectrum resource allocated by the network device. In this manner, scheduling signaling overheads are increased, and the scheduling-based transmission in the unlicensed spectrum may be interfered with. Therefore, a contention-based transmission manner is used in an unlicensed scenario.

For example, the terminal device accesses the network device in the contention-based manner. After receiving a target data packet sent by the terminal device, the network device returns ACK/NACK to the terminal device. In consideration of a limited downlink channel resource, the network device cannot return the ACK/NACK to the terminal device in a timely manner even if the network device successfully receives the target data packet in some occasions. This causes network device cache accumulation. In addition, a quantity of Internet of Things (Internet of Things, IOT) terminals in the future is large, and overheads for returning the ACK/NACK are heavy.

Therefore, a method for alleviating the network device cache accumulation and reducing signaling overheads when the downlink channel resource is limited is urgently needed.

Nokia Networks "On the DL control channel limitations for up to 32 component carriers", R1-152008, 3GPP GENERATION PARTNERSHIP PROJECT, discusses possible enhancements to DL control signalling.

US2015/0305041 A1 discloses a connection configuring method between a base station and a node, and a terminal, a scheduling method for a radio resource in a unlicensed band, and a protocol stack regarding data transfer through the radio resource in the unlicensed band, for a terminal to receive a service by using a radio resource in a licensed band and the radio resource in the unlicensed band.

WO2016/065620 A1 discloses a method and apparatus for acquiring hybrid automatic repeat feedback and a communications system.

### SUMMARY

Embodiments of the present invention provide an unlicensed spectrum ACK/NACK feedback method and related devices according to the claims, to resolve a problem of network device cache accumulation due to untimely returning of ACK/NACK by the network device, and a problem of heavy overheads for returning ACK/NACK by the network device. Throughout the description any references to embodiments which do not fall within the scope of the claims are to be regarded as related examples useful for understanding the invention.

According to a first aspect, an embodiment of the present invention provides an unlicensed spectrum ACK/NACK feedback method according to claim 1.

In this embodiment of the present invention, when the network device classifies the uplink channel into a confirmed uplink channel and an unconfirmed uplink channel, the terminal device may send the target data to the network device based on a mapping relationship between a type of the uplink channel on which the target data is transmitted and the indication information for feeding back the ACK/NACK by the network device. The network device may determine the corresponding indication information based on the type of the uplink channel on which the target data is transmitted and the mapping relationship, and determine, based on the indication information, whether the network device needs to feed back the ACK/NACK to the terminal device. Alternatively, when the network device does not classify the uplink channel, the terminal device may send the target data to the network device based on the mapping relationship between whether the target data carries an indication identifier and the indication information for feeding back the ACK/NACK by the network device. The network device may determine the corresponding indication information based on the mapping relationship and based on whether the target data carries the indication identifier, and determine, based on the indication information, whether the network device needs to feed back the ACK/NACK to the terminal device.

When a downlink channel resource is limited, the network device may selectively feed back the ACK/NACK to the terminal device by using the foregoing method, to resolve the problem of network device cache accumulation due to untimely returning of ACK/NACK by the network device, and the problem of heavy overheads for returning ACK/NACK by the network device.

In this embodiment of the present invention, if the network device classifies the uplink channel into the confirmed uplink channel and the unconfirmed uplink channel, after receiving the target data sent by the terminal device, the network device can determine the corresponding indication information based on the type of the uplink channel on which the target data is transmitted and the mapping relationship.

In this embodiment of the present invention, if the terminal device sends the target data by using the confirmed uplink channel, it indicates that after receiving the target data, the network device needs to feed back the ACK/NACK to the terminal device corresponding to the target data; or if the terminal device sends the target data by using the unconfirmed uplink channel, it indicates that after receiving the target data, the network device does not need to feed back the ACK/NACK to the terminal device corresponding to the target data.

Adding two classified channels and use manners to a broadcast message facilitates resource selection and access control, ensures the ACK/NACK, helps the network device perform processing, and reduces PDCCH overheads.

In this embodiment of the present invention, if the network device classifies the uplink channel into the confirmed uplink channel and the unconfirmed uplink channel, the mapping relationship between the type of the uplink channel on which the target data is transmitted and the indication information for feeding back the ACK/NACK by the network device is an explicit mapping relationship. In other words, the network device has notified the terminal device of which uplink channel (for example, the confirmed uplink channel) on which the target data is transmitted is corresponding to feeding back the ACK/NACK, and which uplink channel (for example, the unconfirmed uplink channel) on which the target data is transmitted is corresponding to not feeding back the ACK/NACK.

In addition, the network device classifies the uplink channel into the confirmed uplink channel and the unconfirmed uplink channel, and adds the two classified channels and use manners to the broadcast message. This helps select an uplink channel resource and control an accessed terminal device, and ensures stable operation of the network device.

In this embodiment of the present invention, for selection of the confirmed uplink channel and the unconfirmed uplink channel by the terminal device, the network device may set a corresponding rule, for example, a probability p of selecting the confirmed uplink channel by the terminal device or a terminal device attribute required for selecting the confirmed uplink channel (for example, a QoS class identifier QCI and a modulation and coding scheme MCS). Certainly, the terminal device may voluntarily determine how to select an uplink channel. For example, the terminal device determines, based on an attribute of the terminal device, whether the ACK/NACK feedback is needed. This is not specifically limited herein.

It should be noted that if the terminal device can voluntarily determine how to select the uplink channel, the broadcast message may not include the selection condition of the feedback uplink channel.

Optionally, the determining, by the network device, the corresponding indication information based on the information about the target data and the mapping relationship includes: determining, by the network device, whether the target data carries an indication identifier; and determining, by the network device, the corresponding indication information based on the mapping relationship and based on whether the target data carries the indication identifier.

In this embodiment of the present invention, if the network device does not classify the uplink channel, after receiving the target data sent by the terminal device, the network device can determine the corresponding indication information based on the mapping relationship and based on whether the target data carries the indication identifier.

Optionally, the determining, by the network device, the corresponding indication information based on the mapping relationship and based on whether the target data carries the indication identifier includes: if the target data carries the indication identifier, determining, by the network device based on the mapping relationship, that the indication information is feeding back the ACK/NACK to the terminal device; or
if the target data does not carry the indication identifier, determining, by the network device based on the mapping relationship, that the indication information is not feeding back the ACK/NACK to the terminal device.

In this embodiment of the present invention, if the terminal device adds a 1-bit flag indication identifier to a target data packet header, it indicates that after receiving the target data, the network device needs to feed back the ACK/NACK to the terminal device; or if the terminal device does not add a 1-bit flag to the target data packet header, it indicates that after receiving the target data, the network device does not need to feed back the ACK/NACK to the terminal device.

The network device can learn, based on whether the target data sent by the terminal device carries the indication identifier, whether the ACK feedback is needed. This helps the network device to perform processing, and reduces PDCCH overheads.

Optionally, the indication identifier is a bit bit flag located in a packet header of the target data, for example, 1 bit or 2 bits, and this is not specifically limited herein.

Optionally, the implicitly notifying, by a network device, a terminal device of a mapping relationship includes: sending, by the network device, a broadcast message to the terminal device, where
the broadcast message includes a corresponding PDCCH location for feeding back the ACK/NACK, and the broadcast message carries a mapping relationship between whether the target data carries the indication identifier and the indication information for feeding back the ACK/NACK by the network device.

In this embodiment of the present invention, if the network device does not classify the uplink channel, the mapping relationship between whether the target data carries the indication identifier and the indication information for feeding back the ACK/NACK by the network device is an implicit mapping relationship. In other words, the network device does not notify the terminal device of which target data is corresponding to feeding back the ACK/NACK, and the terminal device adds the indication identifier to the target data to instruct the network device to feed back the ACK/NACK.

Optionally, the broadcast message may further include a reference condition supporting the ACK/NACK feedback, and the reference condition includes a terminal device reference attribute supporting the ACK/NACK feedback.

In this embodiment of the present invention, when the network device does not classify the uplink channel, the broadcast message may include a corresponding PDCCH location for feeding back the ACK/NACK and a reference condition supporting the ACK/NACK feedback, where the reference condition includes a terminal device reference attribute supporting the ACK/NACK feedback.

It should be noted that if the terminal device can voluntarily determine how to select the uplink channel, the broadcast message may not include the reference condition supporting the ACK/NACK feedback.

According to a second aspect, an embodiment of the present invention provides a network device according to claim 2

Optionally, that the processing module is configured to determine the corresponding indication information based on the information about the target data that is received by the receiving module and the mapping relationship includes:
determining whether the target data carries an indication identifier; and
determining the corresponding indication information based on the mapping relationship and based on whether the target data carries the indication identifier.

Optionally, that the processing module is configured to determine the corresponding indication information based on the mapping relationship and based on whether the target data carries the indication identifier includes:
if the target data carries the indication identifier, determining, based on the mapping relationship, that the indication information is feeding back the ACK/NACK to the terminal device; or
if the target data does not carry the indication identifier, determining, based on the mapping relationship, that the indication information is not feeding back the ACK/NACK to the terminal device.

Optionally, the indication identifier is a bit bit flag located in a packet header of the target data.

Optionally, that the sending module is configured to implicitly notify a terminal device of a mapping relationship includes:
sending a broadcast message to the terminal device, where the broadcast message includes a corresponding PDCCH location for feeding back the ACK/NACK, and the broadcast message carries a mapping relationship between whether the target data carries the indication identifier and the indication information for feeding back the ACK/NACK by the network device.

Optionally, the broadcast message further includes a reference condition supporting the ACK/NACK feedback, and the reference condition includes a terminal device reference attribute supporting the ACK/NACK feedback.

According to a third aspect, an embodiment of the present invention provides a terminal device according to claim 3.

Optionally, that the sending module is configured to send the target data to the network device based on the mapping relationship received by the receiving module includes:
if the selection condition is p of selecting the feedback uplink channel, randomly selecting a value x from [0,1] by using the processing module;
comparing x with p by using the processing module;
if x<p, determining, by using the processing module based on the mapping relationship received by the receiving module, that the uplink channel on which the target data is transmitted is the feedback uplink channel; and
transmitting the target data to the network device by using the feedback uplink channel determined by the processing module;
or
if x>=p, determining, by using the processing module based on the mapping relationship, that the uplink channel on which the target data is transmitted is the non-feedback uplink channel; and
transmitting the target data to the network device by using the non-feedback uplink channel determined by the processing module.

Optionally, that the sending module is configured to send the target data to the network device based on the mapping relationship received by the receiving module includes:
if the selection condition is the terminal device reference attribute for selecting the feedback uplink channel, comparing an attribute of the terminal device with the reference attribute by using the processing module;
if the attribute of the terminal device reaches the reference attribute, determining, by using the processing module based on the mapping relationship received by the receiving module, that the uplink channel on which the target data is transmitted is the feedback uplink channel; and
transmitting the target data to the network device by using the feedback uplink channel determined by the processing module;
or
if the attribute of the terminal device does not reach the reference attribute, determining, by using the processing module based on the mapping relationship, that the uplink channel on which the target data is transmitted is the non-feedback uplink channel; and
transmitting the target data to the network device by using the non-feedback uplink channel determined by the processing module.

Optionally, that the receiving module is configured to receive a mapping relationship implicitly notified by a network device includes:
receiving a broadcast message sent by the network device, where the broadcast message includes a corresponding PDCCH location for feeding back the ACK/NACK, and the broadcast message carries a mapping relationship between whether the target data carries an indication identifier and the indication information for feeding back the ACK/NACK by the network device.

Optionally, that the sending module is configured to send the target data to the network device based on the mapping relationship received by the receiving module includes:
determining, by using the processing module based on the attribute of the terminal device, whether the ACK/NACK feedback is needed;
if the terminal device needs the ACK/NACK feedback, adding the indication identifier to the target data by using the processing module based on the mapping relationship; and
sending the target data that carries the indication identifier to the network device;
or
if the terminal device does not need the ACK/NACK feedback, skipping adding the indication identifier to the target data by using the processing module based on the mapping relationship; and
sending the target data that does not carry the indication identifier to the network device.

Optionally, the broadcast message further includes a reference condition supporting the ACK/NACK feedback, and the reference condition includes a terminal device reference attribute supporting the ACK/NACK feedback.

Optionally, that the sending module is configured to send the target data to the network device based on the mapping relationship received by the receiving module includes:
comparing an attribute of the terminal device with the reference attribute by using the processing module;
if the attribute of the terminal device reaches the reference attribute, adding the indication identifier to the target data by using the processing module based on the mapping relationship; and
sending the target data that carries the indication identifier to the network device;
or
if the attribute of the terminal device does not reach the reference attribute, skipping adding the indication identifier to the target data by using the processing module based on the mapping relationship; and
sending the target data that does not carry the indication identifier to the network device.

According to a fourth aspect, an embodiment of the present invention provides a network device, including a processor, a memory, and a bus, where
the processor is connected to the memory by using the bus, the memory is configured to store program code, and the processor is configured to invoke the program code to perform the method according to any possible implementation of the first aspect.

In the technical solutions provided in the embodiments of the present invention, the network device explicitly or implicitly notifies the terminal device of the mapping relationship between the information about the target data sent by the terminal device and the indication information for feeding back the ACK/NACK by the network device. After receiving the target data, the network device determines the corresponding indication information based on the target data, and feeds back the ACK/NACK to the terminal device based on the indication information for determining to feed back the ACK/NACK. Therefore, compared with the prior art, in the embodiments of the present invention, a cache accumulation problem due to untimely returning of ACK/NACK by the network device is effectively avoided, and overheads for returning ACK/NACK by the network device are reduced.

### BRIEF DESCRIPTION OF DRAWINGS

FIG. 1 is a system architectural diagram of an embodiment of an unlicensed spectrum ACK/NACK feedback method according to an embodiment of the present invention;
FIG. 2 is a flowchart of scheduling-based transmission of a cellular-based Narrowband Cellular Internet of Things NB-cIoT according to an embodiment of the present invention;
FIG. 3 is a flowchart of an embodiment of an unlicensed spectrum ACK/NACK feedback method according to an embodiment of the present invention;
FIG. 4 is a flowchart of another embodiment of an unlicensed spectrum ACK/NACK feedback method according to an embodiment of the present invention;
FIG. 5 is a flowchart of another embodiment of an unlicensed spectrum ACK/NACK feedback method according to an embodiment of the present invention;
FIG. 6 is a flowchart of another embodiment of an unlicensed spectrum ACK/NACK feedback method according to an embodiment of the present invention;
FIG. 7 is a flowchart of another embodiment of an unlicensed spectrum ACK/NACK feedback method according to an embodiment of the present invention;
FIG. 8 is a flowchart of another embodiment of an unlicensed spectrum ACK/NACK feedback method according to an embodiment of the present invention;
FIG. 9 is a block diagram of modules in an embodiment of a network device according to an embodiment of the present invention;
FIG. 10 is a block diagram of modules in an embodiment of a terminal device according to an embodiment of the present invention;
FIG. 11 is a block diagram of hardware in an embodiment of a network device according to an embodiment of the present invention; and
FIG. 12 is a block diagram of hardware in an embodiment of a terminal device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons skilled in the art based on the embodiments of the present invention without creative efforts shall fall within the protection scope of the present invention.

In the specification, claims, and accompanying drawings of the present invention, the terms "first", "second", "third", "fourth", and so on (if any) are intended to distinguish between similar objects but do not necessarily indicate a specific order or sequence. It should be understood that the target data termed in such a way are interchangeable in proper circumstances so that the embodiments described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

The foregoing has used an unlicensed spectrum communications system as an example for description, but persons skilled in the art should learn that the embodiments of the present invention are not merely applicable to the unlicensed spectrum communications system, but applicable to other wireless communications systems such as a Global System for Mobile Communications (Global System for Mobile Communications, GSM), a Universal Mobile Telecommunications System (Universal Mobile Telecommunications System, UMTS), a Code Division Multiple Access (Code Division Multiple Access, CDMA) system, a Long Term Evolution (Long Term Evolution, LTE) system, and a future evolved network system. This is not specifically limited herein.

The embodiments of the present invention are mainly applied to the unlicensed spectrum communications system, and specific application fields may include intelligent meter reading, target data collection in a factory, intelligent office, and the like. The communications system includes a terminal device and a network device.

The terminal device mentioned in the embodiments of the present invention may be a device that provides a user with voice and/or data connectivity, a handheld device having a wireless connection function, or another processing device connected to a wireless modem. The wireless terminal may communicate with one or more core networks through a radio access network (Radio Access Network, RAN). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be referred to as a system, a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

A network device mentioned in the embodiments of the present invention may be a base station, an access point, or may be a device that is in an access network and communicates, over an air interface, with the wireless terminal by using one or more sectors. The base station may be configured to mutually convert a received over-the-air frame and an IP packet and serve as a router between the wireless terminal and a remaining portion of the access network, where the remaining portion of the access network may include an Internet Protocol (IP) network. The base station may further coordinate attribute management of the air interface. For example, the base station may be a base station (BTS, Base Transceiver Station) in GSM or CDMA, or may be a NodeB (NodeB) in WCDMA, or may be an evolved NodeB (eNB or e-NodeB, evolutional Node B) in LTE. This is not limited in this application.

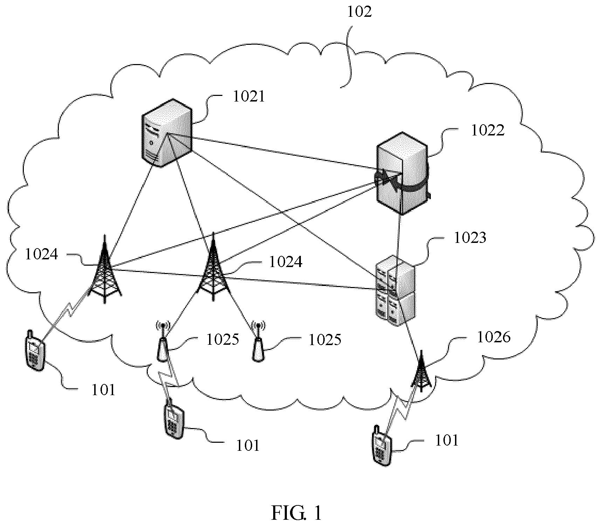

FIG. 1 is a system architectural diagram of an embodiment of an unlicensed spectrum ACK/NACK feedback method according to an embodiment of the present invention. The communications system includes a terminal device 101 and a network device 102. The network device 102 includes a core network controller 1021, a gateway 1022, a baseband processing unit 1023, a macro base station 1024, a micro base station 1025, a radio frequency unit 1026, and the like.

The terminal device 101 establishes a communication connection with network devices such as the macro base station 1024, the micro base station 1025, and the radio frequency unit 1026 by using a radio air interface resource, and the gateway 1022, the baseband processing unit 1023, and the macro base station 1024 are connected to the core network controller 1021.

It should be understood that the macro base station 1024, the micro base station 1025, and the radio frequency unit 1026 may co-exist, or one or more thereof may be separately deployed. This is not specifically limited herein.

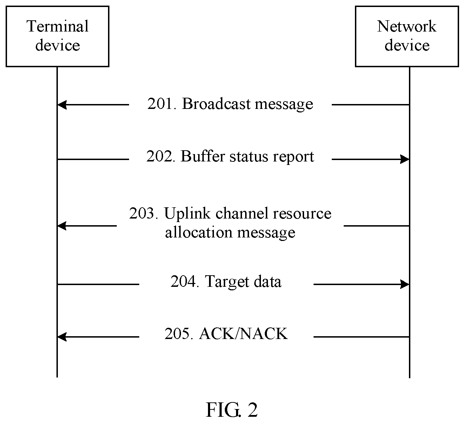

FIG. 2 is a flowchart of scheduling-based transmission of a cellular-based Narrowband Cellular Internet of Things NB-cIoT according to an embodiment of the present invention, and the method includes the following steps.

201. A network device sends a broadcast message to a terminal device, and the terminal device receives the broadcast message sent by the network device.

The broadcast message includes information such as an available physical uplink shared channel PUSCH resource and physical downlink control channel PDCCH locations corresponding to terminal devices of different coverage levels. The PUSCH is used to carry a buffer status report (Buffer Status Report, BSR) sent by the terminal device to the network device, and the PDCCH is used to carry an acknowledgment ACK/negative acknowledgment NACK fed back by the network device to the terminal device.

The network device may notify, by using the broadcast message, the terminal device of the information such as the available PUSCH resource and the PDCCH locations corresponding to the terminal devices of different levels, so that the terminal device can send the BSR to the network device on the available PUSCH, and monitor, on the corresponding PDCCH based on the terminal device level, the ACK/NACK fed back by the network device.

202. The terminal device sends a buffer status report to the network device, and the network device receives the buffer status report sent by the terminal device.

After receiving the broadcast message sent by the network device, the terminal device may obtain, from the broadcast message, the information such as the available PUSCH resource and the PDCCH locations corresponding to the terminal devices of different coverage levels.

In addition, the terminal device may send the BSR to the network device by using the available PUSCH, and the terminal device may notify, by using the BSR, the network device of a data amount of to-be-sent target data in an uplink buffer Buffer.

203. The network device sends an uplink channel resource allocation message to the terminal device, and the terminal device receives the uplink channel resource allocation message sent by the network device.

After receiving the BSR sent by the terminal device, the network device may learn, from the BSR, the data amount of the to-be-sent target data in the uplink buffer, and allocate a corresponding uplink channel resource to the terminal device according to a corresponding scheduling algorithm.

204. The terminal device sends target data to the network device, and the network device receives the target data sent by the terminal device.

After receiving the uplink channel resource allocation message sent by the network device, the terminal device may learn, based on the uplink channel resource allocation message, the uplink channel resource allocated by the network device to the terminal device, and send the target data to the network device by using the uplink channel resource.

205. The network device feeds back ACK/NACK to the terminal device, and the terminal device receives the ACK/NACK fed back by the network device.

After the terminal device sends the target data to the network device, if the network device receives the target data sent by the terminal device, the network device feeds back the ACK/NACK to the terminal device.

In the method shown in FIG. 2, when a downlink channel resource is limited, even if the network device receives the target data sent by the terminal device, the network device cannot return the ACK/NACK to the terminal device in a timely manner. Especially when the network device is heavily loaded, if the network device replies to target data sent by each terminal device, overheads for returning the ACK/NACK are heavy, and network device cache accumulation is easily caused. Consequently, the network device operates unstably.

Based on this, this embodiment of the present invention provides an unlicensed spectrum ACK/NACK feedback method, so as to resolve a problem of network device cache accumulation due to untimely returning of ACK/NACK by the network device, and a problem of heavy overheads for returning ACK/NACK by the network device.

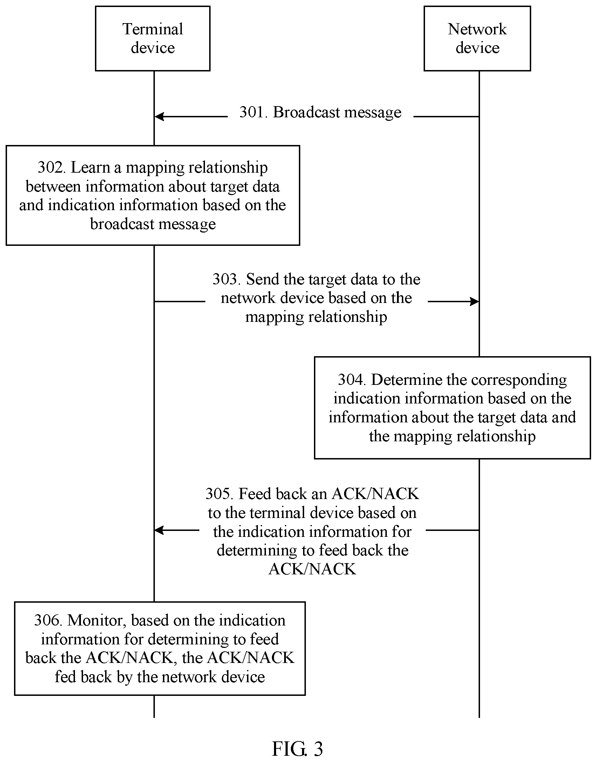

FIG. 3 is a flowchart of an embodiment of an unlicensed spectrum ACK/NACK feedback method according to an embodiment of the present invention, and the method includes the following steps.

301. A network device sends a broadcast message to a terminal device, and the terminal device receives the broadcast message sent by the network device.

In this embodiment of the present invention, the network device may classify an uplink channel into two types: a confirmed confirmed uplink channel (namely, a feedback uplink channel) and an unconfirmed unconfirmed uplink channel (namely, a non-feedback uplink channel). The confirmed uplink channel is an uplink channel on which the network device needs to provide ACK/NACK feedback. For example, the terminal device sends target data to the network device by using the confirmed uplink channel, and after receiving the target data on the confirmed uplink channel, the network device needs to feed back the ACK/NACK to the terminal device. The unconfirmed uplink channel is an uplink channel on which the network device does not need to provide the ACK/NACK feedback. For example, the terminal device sends the target data to the network device by using the unconfirmed uplink channel, and after receiving the target data on the unconfirmed uplink channel, the network device does not need to feed back the ACK/NACK to the terminal device.

Therefore, in this embodiment of the present invention, different uplink channels on which the target data is transmitted may be used as indication information to instruct the network device whether to feed back the ACK/NACK. The network device determines, based on target data received from different uplink channels (the confirmed uplink channel or the unconfirmed uplink channel), whether the network device needs to feed back the ACK/NACK. When a downlink channel resource is limited, the network device provides feedback only for some uplink channels (for example, the confirmed uplink channel). This reduces overheads for returning ACK/NACK by the network device.

In addition, the network device may bind a mapping relationship between the confirmed uplink channel and a PDCCH. When the terminal device needs the ACK/NACK feedback, the terminal device may monitor the ACK/NACK on the corresponding PDCCH. For example, if the network device receives, on the confirmed uplink channel, the target data sent by the terminal device, correspondingly, the network device feeds back, on a PDCCH corresponding to the confirmed uplink channel, the ACK/NACK to the terminal device. Therefore, after sending the target data to the network device, the terminal device may monitor the ACK/NACK on the PDCCH corresponding to the confirmed uplink channel.

In addition, for selection of the confirmed uplink channel and the unconfirmed uplink channel by the terminal device, the network device may set a corresponding rule, for example, a probability p of selecting the confirmed uplink channel by the terminal device or a terminal device attribute required for selecting the confirmed uplink channel (for example, a QoS class identifier QCI and a modulation and coding scheme MCS). Certainly, the terminal device may voluntarily determine how to select an uplink channel. For example, the terminal device determines, based on an attribute of the terminal device, whether the ACK/NACK feedback is needed. This is not specifically limited herein.

It should be understood that the network device may not classify the uplink channel. In other words, the uplink channel does not have two types: the confirmed uplink channel and the unconfirmed uplink channel. The network device may notify the terminal device of a terminal device attribute that supports the ACK/NACK feedback and that includes the QCI, the MCS, and the like of the terminal device. The terminal device may learn, based on the attribute of the terminal device, whether the network device can provide the ACK/NACK feedback, and use an indication identifier (for example, a flag carried in a packet header of the target data (for example, 1 bit or 2 bits, and this is not specifically limited herein)) to notify the network device. After receiving the indication identifier, the network device learns ACK/NACK feedback requirement of the terminal device. Certainly, the terminal device may voluntarily determine, based on the attribute of the terminal device, whether the ACK/NACK feedback is needed, and use the indication identifier to notify the network device. After receiving the indication identifier, the network device learns the ACK/NACK feedback requirement of the terminal device. This is not specifically limited herein. In other words, in this embodiment of the present invention, whether the terminal device adds the indication identifier when sending the target data is used as the indication information to instruct the network device whether to feed back the ACK/NACK.

When the network device classifies the uplink channel into the confirmed uplink channel and the unconfirmed uplink channel, the broadcast message may include the uplink channel type, a PDCCH location corresponding to the feedback uplink channel, and a selection condition of the feedback uplink channel. The selection condition includes the probability p of selecting the feedback uplink channel or a terminal device reference attribute for selecting the feedback uplink channel.

It should be noted that if the terminal device can voluntarily determine how to select the uplink channel, the broadcast message may not include the selection condition of the feedback uplink channel.

Further, the broadcast message may further carry a mapping relationship between the type of the uplink channel on which the target data is transmitted and the indication information for feeding back the ACK/NACK by the network device. When sending the target data, the terminal device selects the corresponding uplink channel based on whether the ACK/NACK feedback is needed. The network device obtains corresponding indication information based on target data received on different uplink channels, and determines, based on the indication information, whether the network device needs to feed back the ACK/NACK to the terminal device.

In this embodiment of the present invention, if the network device classifies the uplink channel into the confirmed uplink channel and the unconfirmed uplink channel, the mapping relationship between the type of the uplink channel on which the target data is transmitted and the indication information for feeding back the ACK/NACK by the network device is an explicit mapping relationship. In other words, the network device has notified the terminal device of which uplink channel (for example, the confirmed uplink channel) on which the target data is transmitted is corresponding to feeding back the ACK/NACK, and which uplink channel (for example, the unconfirmed uplink channel) on which the target data is transmitted is corresponding to not feeding back the ACK/NACK.

When the network device does not classify the uplink channel, the broadcast message may include a corresponding PDCCH location for feeding back the ACK/NACK and a reference condition supporting the ACK/NACK feedback, where the reference condition includes a terminal device reference attribute supporting the ACK/NACK feedback.

It should be noted that if the terminal device can voluntarily determine how to select the uplink channel, the broadcast message may not include the reference condition supporting the ACK/NACK feedback.

Further, the broadcast message may further carry a mapping relationship between whether the target data carries the indication identifier and the indication information for feeding back the ACK/NACK by the network device. When sending the target data, the terminal device adds the indication identifier to the target data based on whether the ACK/NACK feedback is needed. After receiving the target data, the network device determines, based on whether the target data carries the indication identifier, whether the network device needs to feed back the ACK/NACK to the terminal device.

In this embodiment of the present invention, if the network device does not classify the uplink channel, the mapping relationship between whether the target data carries the indication identifier and the indication information for feeding back the ACK/NACK by the network device is an implicit mapping relationship. In other words, the network device does not notify the terminal device of which target data is corresponding to feeding back the ACK/NACK, and the terminal device adds the indication identifier to the target data to instruct the network device to feed back the ACK/NACK.

302. The terminal device learns a mapping relationship between information about target data and indication information based on the broadcast message.

If the network device classifies the uplink channel into the confirmed uplink channel and the unconfirmed uplink channel, the terminal device may learn, by using the broadcast message, the mapping relationship between the type of the uplink channel on which the target data is transmitted and the indication information, and the type of the uplink channel on which the target data is transmitted is the information about the target data.

In addition, the terminal device may further learn, by using the broadcast message, the uplink channel type, the PDCCH location corresponding to the feedback uplink channel, and the selection condition of the feedback uplink channel. The selection condition includes the probability p of selecting the feedback uplink channel or the terminal device reference attribute for selecting the feedback uplink channel.

It should be noted that if the terminal device can voluntarily determine how to select the uplink channel, the broadcast message may not include the selection condition of the feedback uplink channel.

If the network device does not classify the uplink channel, the terminal device may learn, by using the broadcast message, whether the target data carries a mapping relationship between the indication identifier and the indication information, and whether the target data carries the indication identifier is the information about the target data.

In addition, the terminal device may further learn, by using the broadcast message, the corresponding PDCCH location for feeding back the ACK/NACK and the reference condition supporting the ACK/NACK feedback. The reference condition includes the terminal device reference attribute supporting the ACK/NACK feedback.

It should be noted that if the terminal device can voluntarily determine how to select the uplink channel, the broadcast message may not include the reference condition supporting the ACK/NACK feedback.

303. The terminal device sends the target data to the network device based on the mapping relationship, and the network device receives the target data sent by the terminal device.

If the network device classifies the uplink channel into the confirmed uplink channel and the unconfirmed uplink channel, the terminal device may voluntarily determine or determine, based on the selection condition that is set by the network device, the type of the uplink channel on which the target data is transmitted, and send the target data to the network device by using a determined uplink channel.

If the network device does not classify the uplink channel, the terminal device may voluntarily determine or determine, based on the reference condition that supports the ACK/NACK feedback and that is set by the network device, whether the target data carries the indication identifier, and send the target data to the network device.

304. The network device determines the corresponding indication information based on the information about the target data and the mapping relationship.

If the network device classifies the uplink channel into the confirmed uplink channel and the unconfirmed uplink channel, after receiving the target data sent by the terminal device, the network device can determine the corresponding indication information based on the type of the uplink channel on which the target data is transmitted and the mapping relationship.

If the network device does not classify the uplink channel, after receiving the target data sent by the terminal device, the network device can determine the corresponding indication information based on the mapping relationship and based on whether the target data carries the indication identifier.

305. The network device feeds back the ACK/NACK to the terminal device based on the indication information for determining to feed back the ACK/NACK.

If the network device classifies the uplink channel into the confirmed uplink channel and the unconfirmed uplink channel, and the terminal device sends the target data to the network device by using the confirmed uplink channel, the network device may determine, based on the type of the uplink channel on which the target data is transmitted and the mapping relationship, that the indication information is feeding back the ACK/NACK to the terminal device. The network device feeds back the ACK/NACK to the terminal device based on the indication information for determining to feed back the ACK/NACK.

If the network device does not classify the uplink channel, and the terminal device adds, to the target data, an indication identifier for feeding back the ACK/NACK, the network device may determine, based on the indication identifier for feeding back the ACK/NACK in the target data and the mapping relationship, that the indication information is feeding back the ACK/NACK to the terminal device. The network device feeds back the ACK/NACK to the terminal device based on the indication information for determining to feed back the ACK/NACK.

306. The terminal device monitors, based on the indication information for determining to feed back the ACK/NACK, the ACK/NACK fed back by the network device.

When the indication information is that the network device needs to feed back the ACK/NACK to the terminal device, after sending the target data to the network device, the terminal device may monitor, on the corresponding PDCCH, the ACK/NACK fed back by the network device.

It should be noted that an execution order between step 306 and step 304 or step 305 is not limited. After sending the target data to the network device, the terminal device may monitor, on the corresponding PDCCH, the ACK/NACK fed back by the network device. Then the network device determines the corresponding indication information based on the information about the target data and the mapping relationship, and feeds back the ACK/NACK to the terminal device based on the indication information for determining to feed back the ACK/NACK. This is not specifically limited herein.

In this embodiment of the present invention, when the network device classifies the uplink channel into the confirmed uplink channel and the unconfirmed uplink channel, the terminal device may send the target data to the network device based on the mapping relationship between the type of the uplink channel on which the target data is transmitted and the indication information for feeding back the ACK/NACK by the network device. The network device may determine the corresponding indication information based on the type of the uplink channel on which the target data is transmitted and the mapping relationship, and determine, based on the indication information, whether the network device needs to feed back the ACK/NACK to the terminal device. Alternatively, when the network device does not classify the uplink channel, the terminal device may send the target data to the network device based on the mapping relationship between whether the target data carries the indication identifier and the indication information for feeding back the ACK/NACK by the network device. The network device may determine the corresponding indication information based on the mapping relationship and based on whether the target data carries the indication identifier, and determine, based on the indication information, whether the network device needs to feed back the ACK/NACK to the terminal device.

The foregoing generally describes the unlicensed spectrum ACK/NACK feedback method in this embodiment of the present invention, and the following describes, with reference to specific application scenarios, the unlicensed spectrum ACK/NACK feedback method in this embodiment of the present invention.

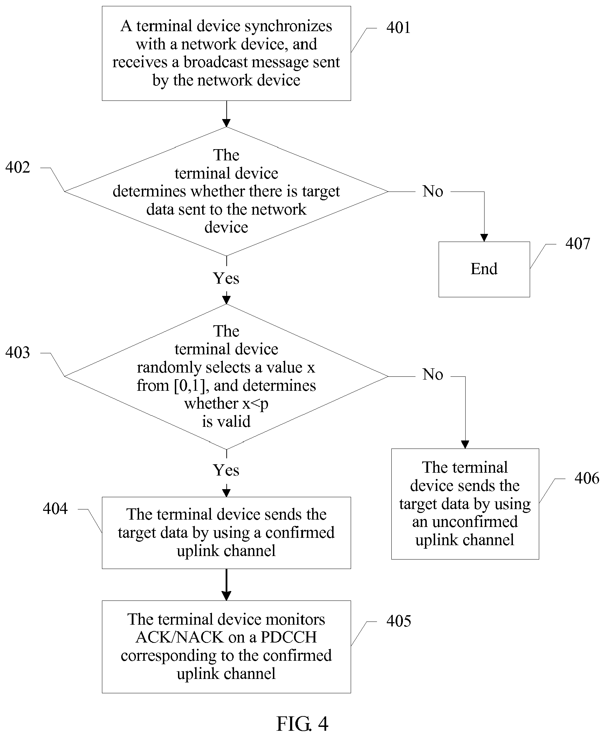

FIG. 4 is a flowchart of another embodiment of an unlicensed spectrum ACK/NACK feedback method according to an embodiment of the present invention, and the method includes the following steps.

401. A terminal device synchronizes with a network device, and receives a broadcast message sent by the network device.

In this embodiment of the present invention, the network device classifies an uplink channel into a confirmed uplink channel and an unconfirmed uplink channel, and when selecting the uplink channel, the terminal device selects the confirmed uplink channel and the unconfirmed uplink channel by using a probability p.

The terminal device may learn, by using the broadcast message, uplink channel classification, a PDCCH location corresponding to the confirmed channel, and the probability p of selecting the confirmed uplink channel.

402. The terminal device determines whether there is target data sent to the network device; and if there is the target data sent to the network device, step 403 is performed, or if there is no target data sent to the network device, step 407 is performed.

403. The terminal device randomly selects a value x from [0,1], and determines whether x<p is valid; and if x<p is valid, step 404 is performed, or if x<p is invalid, step 406 is performed.

If the value x randomly selected by the terminal device is less than p, the terminal device selects the confirmed uplink channel to send the target data; or if the value x randomly selected by the terminal device is not less than p, the terminal device selects the unconfirmed uplink channel to send the target data.

404. The terminal device sends the target data by using a confirmed uplink channel.

If the terminal device sends the target data by using the confirmed uplink channel, it indicates that after receiving the target data, the network device needs to feed back ACK/NACK to the terminal device corresponding to the target data.

405. The terminal device monitors ACK/NACK on a PDCCH corresponding to the confirmed uplink channel.

If the terminal device selects the confirmed uplink channel to send the target data, after sending the target data, the terminal device monitors the ACK/NACK on the PDCCH corresponding to the confirmed uplink channel.

406. The terminal device sends the target data by using an unconfirmed uplink channel.

If the terminal device sends the target data by using the unconfirmed uplink channel, it indicates that after receiving the target data, the network device does not need to feed back the ACK/NACK to the terminal device corresponding to the target data.

It should be noted that if the terminal device selects the unconfirmed uplink channel to send the target data, after sending the target data, the terminal device terminates this sending process, and does not need to monitor the ACK/NACK on the PDCCH, thereby reducing power consumption of the terminal device.

407. End.

In this embodiment of the present invention, when the network device classifies the uplink channel into the confirmed uplink channel and the unconfirmed uplink channel, the terminal device selects the confirmed uplink channel and the unconfirmed uplink channel by using the probability p. The network device may determine the corresponding indication information based on the type of the uplink channel on which the target data is transmitted and the mapping relationship, and determine, based on the indication information, whether the network device needs to feed back the ACK/NACK to the terminal device.

The foregoing describes an application scenario in which the terminal device selects the confirmed uplink channel and the unconfirmed uplink channel by using the probability p when the network device classifies the uplink channel into the confirmed uplink channel and the unconfirmed uplink channel, and the following describes an application scenario in which the terminal device selects the confirmed uplink channel and the unconfirmed uplink channel based on an attribute of the terminal device when the network device classifies the uplink channel into the confirmed uplink channel and the unconfirmed uplink channel.

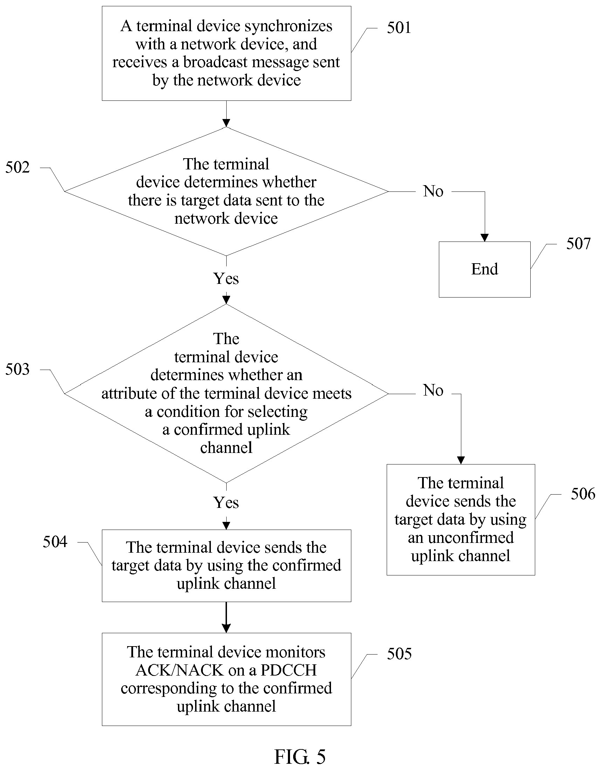

FIG. 5 is a flowchart of another embodiment of an unlicensed spectrum ACK/NACK feedback method according to an embodiment of the present invention, and the method includes the following steps.

501 and 502 are similar to 401 and 402 in FIG. 4. Refer to the foregoing description, and details are not described herein again.

503. A terminal device determines whether an attribute of the terminal device meets a condition for selecting a confirmed uplink channel.

In this embodiment of the present invention, the network device classifies an uplink channel into a confirmed uplink channel and an unconfirmed uplink channel, and when selecting the uplink channel, the terminal device selects the confirmed uplink channel and the unconfirmed uplink channel based on the attribute of the terminal device (for example, a QoS class identifier QCI and a modulation and coding scheme MCS).

The network device may notify, by using a broadcast message, the terminal device of a specific attribute that the terminal device needs to have when selecting the confirmed uplink channel to send target data, for example, an indicator parameter such as the QCI or the MCS of the terminal device needs to reach a threshold specified by the network device.

504-507 are similar to 404-407 in FIG. 4. Refer to the foregoing description, and details are not described herein again.

In this embodiment of the present invention, when the network device classifies the uplink channel into the confirmed uplink channel and the unconfirmed uplink channel, the terminal device may also select the confirmed uplink channel and the unconfirmed uplink channel based on the attribute of the terminal device. The network device may determine corresponding indication information based on a type of the uplink channel on which the target data is transmitted and a mapping relationship, and determine, based on the indication information, whether the network device needs to feed back ACK/NACK to the terminal device.

The foregoing describes an application scenario in which the terminal device selects the confirmed uplink channel and the unconfirmed uplink channel based on the attribute of the terminal device when the network device classifies the uplink channel into the confirmed uplink channel and the unconfirmed uplink channel, and the following describes an application scenario in which the terminal device voluntarily determines, based on the attribute of the terminal device when the network device classifies the uplink channel into the confirmed uplink channel and the unconfirmed uplink channel, whether ACK/NACK feedback is needed to select the confirmed uplink channel and the unconfirmed uplink channel.

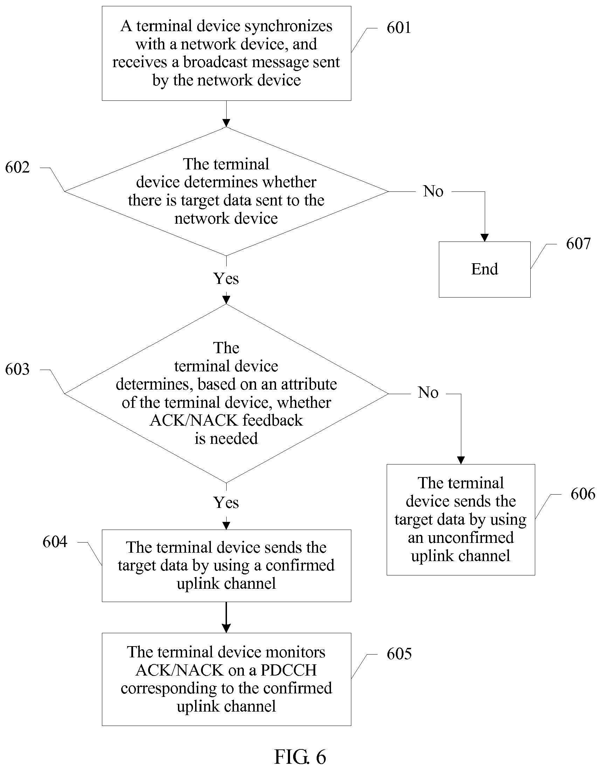

FIG. 6 is a flowchart of another embodiment of an unlicensed spectrum ACK/NACK feedback method according to an embodiment of the present invention, and the method includes the following steps.

601 and 602 are similar to 401 and 402 in FIG. 4. Refer to the foregoing description, and details are not described herein again.

603. A terminal device determines whether an attribute of the terminal device meets a condition for selecting a confirmed uplink channel.

In this embodiment of the present invention, the network device classifies an uplink channel into a confirmed uplink channel and an unconfirmed uplink channel, and when selecting the uplink channel, the terminal device voluntarily determines, based on the attribute of the terminal device, whether ACK/NACK feedback is needed to select the confirmed uplink channel and the unconfirmed uplink channel.

The terminal device may voluntarily determine, based on the attribute of the terminal device, whether the ACK/NACK feedback is needed, and the network device does not need to set an uplink channel selecting manner. This reduces power consumption of the network device, and a broadcast message does not need to carry information about the uplink channel selecting manner, thereby saving the broadcast message.

604-607 are similar to 404-407 in FIG. 4. Refer to the foregoing description, and details are not described herein again.

In this embodiment of the present invention, when the network device classifies the uplink channel into the confirmed uplink channel and the unconfirmed uplink channel, the terminal device may also select the confirmed uplink channel and the unconfirmed uplink channel based on the attribute of the terminal device, and the network device does not need to set the uplink channel selecting manner. This reduces the power consumption of the network device, and the broadcast message does not need to carry the information about the uplink channel selecting manner, thereby saving the broadcast message. The network device may determine corresponding indication information based on a type of the uplink channel on which target data is transmitted and a mapping relationship, and determine, based on the indication information, whether the network device needs to feed back ACK/NACK to the terminal device.

The foregoing describes an application scenario in which the terminal device voluntarily determines, based on the attribute of the terminal device when the network device classifies the uplink channel into the confirmed uplink channel and the unconfirmed uplink channel, whether the ACK/NACK feedback is needed to select the confirmed uplink channel and the unconfirmed uplink channel, and the following describes an application scenario in which the terminal device selects, based on the attribute of the terminal device when the network device does not classify the uplink channel, whether to add an indication identifier to the target data.

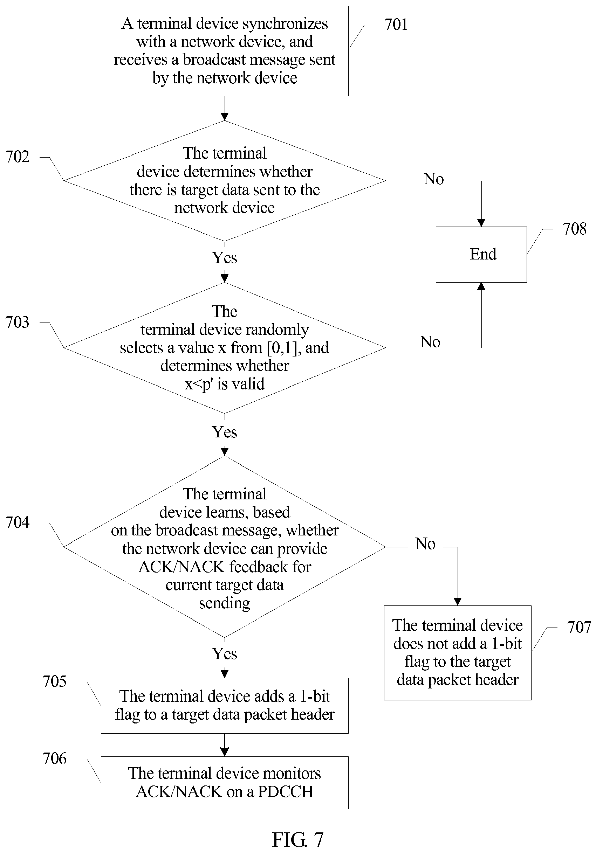

FIG. 7 is a flowchart of another embodiment of an unlicensed spectrum ACK/NACK feedback method according to an embodiment of the present invention, and the method includes the following steps.

701 and 702 are similar to 401 and 402 in FIG. 4. Refer to the foregoing description, and details are not described herein again.

703. A terminal device randomly selects a value x from [0,1], and determines whether x<p' is valid; and if x<p' is valid, step 704 is performed, or if x<p' is invalid, step 708 is performed again.

In this embodiment of the present invention, a network device does not classify an uplink channel, but the network device may notify, by using a broadcast message, the terminal device of an available uplink channel resource and the corresponding access threshold p', a PDCCH location corresponding to the available uplink channel resource, and a terminal device attribute supporting ACK feedback.

If the value x randomly selected by the terminal device is less than p', the network device allows the terminal device to access the network device; or if the value x randomly selected by the terminal device is not less than p', the network device does not allow the terminal device to access the network device.

704. The terminal device learns, based on the broadcast message, whether the network device can provide ACK/NACK feedback for current target data sending; and if the network device can provide the ACK/NACK feedback for the current target data sending, step 705 is performed, or if the network device cannot provide the ACK/NACK feedback for the current target data sending, step 707 is performed.

The terminal device determines, based on an attribute of the terminal device and the terminal device attribute that supports the ACK feedback by the network device and that is in the broadcast message, whether the target data carries an indication identifier.

705. The terminal device adds a 1-bit flag to a target data packet header.

If the terminal device adds a 1-bit flag indication identifier to the target data packet header, it indicates that after receiving the target data, the network device needs to feed back the ACK/NACK to the terminal device.

706. The terminal device monitors ACK/NACK on a PDCCH.

If the terminal device adds a 1-bit flag to the target data packet header, after sending the target data, the terminal device monitors the ACK/NACK on the PDCCH corresponding to the uplink channel on which the target data is transmitted. However, if the terminal device does not add a 1-bit flag to the target data packet header, after sending the target data, the terminal device does not need to monitor the ACK/NACK on the PDCCH. This reduces power consumption of the terminal device.

707. The terminal device does not add a 1-bit flag to the target data packet header.

If the terminal device does not add a 1-bit flag to the target data packet header, it indicates that after receiving the target data, the network device does not need to feed back the ACK/NACK to the terminal device.

708. End.

In this embodiment of the present invention, when the network device does not classify the uplink channel, the terminal device may select, based on the attribute of the terminal device, whether to add the indication identifier to the target data. The network device may determine the corresponding indication information based on the mapping relationship and based on whether the target data carries the indication identifier, and determine, based on the indication information, whether the network device needs to feed back the ACK/NACK to the terminal device.

The foregoing describes an application scenario in which the terminal device selects, based on the attribute of the terminal device when the network device does not classify the uplink channel, whether to add the indication identifier to the target data, and the following describes an application scenario in which the terminal device voluntarily determines, based on the attribute of the terminal device when the network device does not classify the uplink channel, whether the ACK/NACK feedback is needed to select whether to add the indication identifier to the target data.

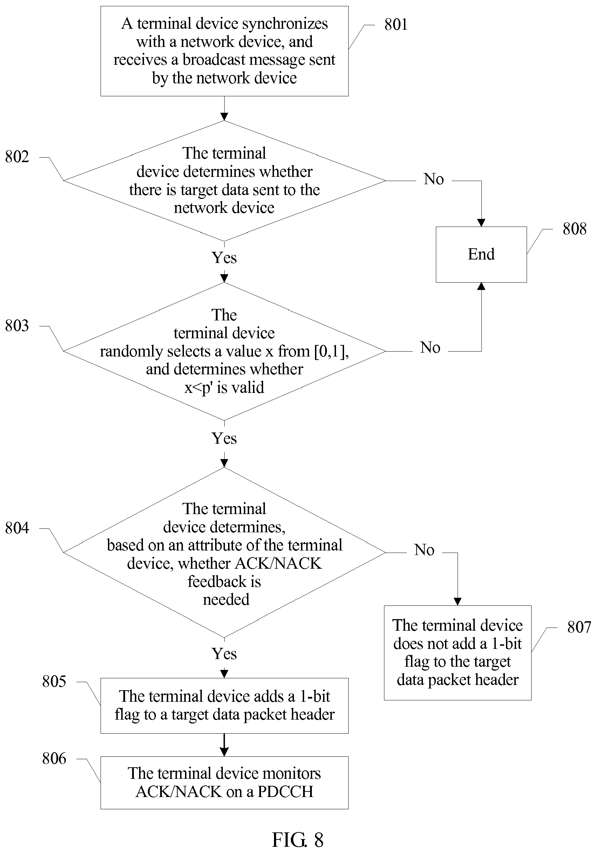

FIG. 8 is a flowchart of another embodiment of an unlicensed spectrum ACK/NACK feedback method according to an embodiment of the present invention, and the method includes the following steps.

801-803 are similar to 701-703 in FIG. 7. Refer to the foregoing description, and details are not described herein again.

804. A terminal device determines, based on an attribute of the terminal device, whether ACK/NACK feedback is needed, and if the ACK/NACK feedback is needed, step 805 is performed, or if the ACK/NACK feedback is not needed, step 807 is performed.

In this embodiment of the present invention, a network device does not classify an uplink channel, but the terminal device may voluntarily determine, based on the attribute of the terminal device, whether the ACK/NACK feedback is needed, and the network device does not need to set an uplink channel selecting manner. This reduces power consumption of the network device, and a broadcast message does not need to carry information about the uplink channel selecting manner, thereby saving the broadcast message.

805-808 are similar to 705-708 in FIG. 7. Refer to the foregoing description, and details are not described herein again.

In this embodiment of the present invention, when the network device does not classify the uplink channel, the terminal device may voluntarily determine, based on the attribute of the terminal device, whether the ACK/NACK feedback is needed to select whether to add an indication identifier to target data, and the network device does not need to set the uplink channel selecting manner. This reduces power consumption of the network device, and the broadcast message does not need to carry the information about the uplink channel selecting manner, thereby saving the broadcast message. The network device may determine corresponding indication information based on a mapping relationship and based on whether the target data carries the indication identifier, and determine, based on the indication information, whether the network device needs to feed back ACK/NACK to the terminal device.

The foregoing describes the unlicensed spectrum ACK/NACK feedback method in this embodiment of the present invention, and the following describes the network device in this embodiment of the present invention.

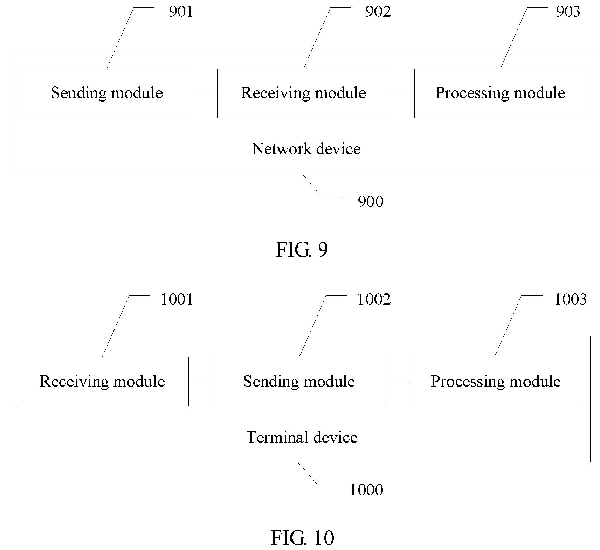

FIG. 9 is a block diagram of modules in an embodiment of a network device according to an embodiment of the present invention, and the network device 900 includes:
a sending module 901, configured to explicitly or implicitly notify a terminal device of a mapping relationship, where the mapping relationship includes a mapping relationship between information about target data sent by the terminal device and indication information for feeding back ACK/NACK by a network device;
a receiving module 902, configured to receive the target data sent by the terminal device; and
a processing module 903, configured to determine the corresponding indication information based on the information about the target data that is received by the receiving module 902 and the mapping relationship.

The sending module 901 is further configured to feed back the ACK/NACK to the terminal device based on the indication information that is for determining to feed back the ACK/NACK and that is obtained after the processing performed by the processing module 903.

It should be noted that a physical apparatus corresponding to the sending module 901 is a transmitter, a physical apparatus corresponding to the receiving module 902 is a receiver, and a physical apparatus corresponding to the processing module 903 is a processor. For specific functions of the foregoing modules, refer to steps or functions corresponding to the network device in the method embodiment shown in FIG. 3, and details are not described herein again.

Optionally, that the processing module 903 is configured to determine the corresponding indication information based on the information about the target data that is received by the receiving module 902 and the mapping relationship may include:
determining a type of an uplink channel on which the target data received by the receiving module 902 is transmitted, where the uplink channel type includes a feedback uplink channel and a non-feedback uplink channel; and
determining the corresponding indication information based on the type of the uplink channel on which the target data received by the receiving module 902 is transmitted and the mapping relationship.

Optionally, that the processing module 903 is configured to determine the corresponding indication information based on the type of the uplink channel on which the target data received by the receiving module 902 is transmitted and the mapping relationship may include:
if the target data is transmitted on the feedback uplink channel, determining, based on the mapping relationship, that the indication information is feeding back the ACK/NACK to the terminal device; or
if the target data is transmitted on the non-feedback uplink channel, determining, based on the mapping relationship, that the indication information is not feeding back the ACK/NACK to the terminal device.

Optionally, that the sending module 901 is configured to explicitly notify a terminal device of a mapping relationship may include:
sending a broadcast message to the terminal device, where the broadcast message may include the uplink channel type and a physical downlink control channel PDCCH location corresponding to the feedback uplink channel, and the broadcast message carries a mapping relationship between the type of the uplink channel on which the target data is transmitted and the indication information for feeding back the ACK/NACK by the network device.

Optionally, the broadcast message may further include a selection condition of the feedback uplink channel, and the selection condition includes a probability p of selecting the feedback uplink channel or a terminal device reference attribute for selecting the feedback uplink channel.

Optionally, that the processing module 903 is configured to determine the corresponding indication information based on the information about the target data that is received by the receiving module 902 and the mapping relationship may include:
determining whether the target data carries an indication identifier; and
determining the corresponding indication information based on the mapping relationship and based on whether the target data carries the indication identifier.

Optionally, that the processing module 903 is configured to determine the corresponding indication information based on the mapping relationship and based on whether the target data carries the indication identifier may include:
if the target data carries the indication identifier, determining, based on the mapping relationship, that the indication information is feeding back the ACK/NACK to the terminal device; or
if the target data does not carry the indication identifier, determining, based on the mapping relationship, that the indication information is not feeding back the ACK/NACK to the terminal device.

Optionally, the indication identifier is a bit bit flag located in a packet header of the target data.

Optionally, that the sending module 901 is configured to implicitly notify a terminal device of a mapping relationship may include:
sending a broadcast message to the terminal device, where the broadcast message includes a corresponding PDCCH location for feeding back the ACK/NACK, and the broadcast message carries a mapping relationship between whether the target data carries the indication identifier and the indication information for feeding back the ACK/NACK by the network device.

Optionally, the broadcast message may further include a reference condition supporting the ACK/NACK feedback, and the reference condition includes a terminal device reference attribute supporting the ACK/NACK feedback.

The foregoing describes the network device in this embodiment of the present invention, and the following describes the terminal device in this embodiment of the present invention.

FIG. 10 is a block diagram of modules in an embodiment of a terminal device according to an embodiment of the present invention, and the terminal device 1000 includes:
a receiving module 1001, configured to receive a mapping relationship explicitly or implicitly notified by a network device, where the mapping relationship includes a mapping relationship between information about target data sent by the terminal device and indication information for feeding back ACK/NACK by the network device;
a sending module 1002, configured to send the target data to the network device based on the mapping relationship received by the receiving module 1001; and
a processing module 1003, configured to: determine the corresponding indication information based on the information about the target data that is sent by the sending module 1002 and the mapping relationship received by the receiving module; and further monitor, based on the indication information for determining to feed back the ACK/NACK, the ACK/NACK fed back by the network device.

It should be noted that a physical apparatus corresponding to the receiving module 1001 is a receiver, a physical apparatus corresponding to the sending module 1002 is a transmitter, and a physical apparatus corresponding to the processing module 1003 is a processor. For specific functions of the foregoing modules, refer to steps or functions corresponding to the terminal device in the method embodiment shown in FIG. 3 to FIG. 8, and details are not described herein again.

Optionally, that the receiving module 1001 is configured to receive a mapping relationship explicitly notified by a network device may include:
receiving a broadcast message sent by the network device, where the broadcast message includes an uplink channel type and a PDCCH location corresponding to a feedback uplink channel, the uplink channel type includes a feedback uplink channel and a non-feedback uplink channel, and the broadcast message carries a mapping relationship between the type of the uplink channel on which the target data is transmitted and the indication information for feeding back the ACK/NACK by the network device.

Optionally, that the sending module 1002 is configured to send the target data to the network device based on the mapping relationship received by the receiving module 1001 may include:
determining, by using the processing module 1003 based on the attribute of the terminal device, whether the ACK/NACK feedback is needed;
if the terminal device needs the ACK/NACK feedback, determining, by using the processing module 1003 based on the mapping relationship received by the receiving module 1001, that the uplink channel on which the target data is transmitted is the feedback uplink channel; and
transmitting the target data to the network device by using the feedback uplink channel determined by the processing module 1003;
or
if the terminal device does not need the ACK/NACK feedback, determining, by using the processing module 1003 based on the mapping relationship received by the receiving module 1001, that the uplink channel on which the target data is transmitted is the non-feedback uplink channel; and
transmitting the target data to the network device by using the non-feedback uplink channel determined by the processing module 1003.

Optionally, the broadcast message may further include a selection condition of the feedback uplink channel, and the selection condition includes a probability p of selecting the feedback uplink channel or a terminal device reference attribute for selecting the feedback uplink channel.

Optionally, that the sending module 1002 is configured to send the target data to the network device based on the mapping relationship received by the receiving module 1001 may include:
if the selection condition is p of selecting the feedback uplink channel, randomly selecting a value x from [0,1] by using the processing module 1003;
comparing x with p by using the processing module 1003;
if x<p, determining, by using the processing module 1003 based on the mapping relationship received by the receiving module 1001, that the uplink channel on which the target data is transmitted is the feedback uplink channel; and
transmitting the target data to the network device by using the feedback uplink channel determined by the processing module 1003;
or
if x>=p, determining, by using the processing module 1003 based on the mapping relationship, that the uplink channel on which the target data is transmitted is the non-feedback uplink channel; and
transmitting the target data to the network device by using the non-feedback uplink channel determined by the processing module 1003.

Optionally, that the sending module 1002 is configured to send the target data to the network device based on the mapping relationship received by the receiving module 1001 may include:
if the selection condition is the terminal device reference attribute for selecting the feedback uplink channel, comparing an attribute of the terminal device with the reference attribute by using the processing module;
if the attribute of the terminal device reaches the reference attribute, determining, by using the processing module based on the mapping relationship received by the receiving module, that the uplink channel on which the target data is transmitted is the feedback uplink channel; and
transmitting the target data to the network device by using the feedback uplink channel determined by the processing module;
or
if the attribute of the terminal device does not reach the reference attribute, determining, by using the processing module based on the mapping relationship, that the uplink channel on which the target data is transmitted is the non-feedback uplink channel; and
transmitting the target data to the network device by using the non-feedback uplink channel determined by the processing module.

Optionally, that the receiving module 1001 is configured to receive a mapping relationship implicitly notified by a network device may include:
receiving a broadcast message sent by the network device, where the broadcast message includes a corresponding PDCCH location for feeding back the ACK/NACK, and the broadcast message carries a mapping relationship between whether the target data carries an indication identifier and the indication information for feeding back the ACK/NACK by the network device.

Optionally, that the sending module 1002 is configured to send the target data to the network device based on the mapping relationship received by the receiving module 1001 includes:
determining, by using the processing module 1003 based on the attribute of the terminal device, whether the ACK/NACK feedback is needed;
if the terminal device needs the ACK/NACK feedback, adding the indication identifier to the target data by using the processing module 1003 based on the mapping relationship; and
sending the target data that carries the indication identifier to the network device;
or
if the terminal device does not need the ACK/NACK feedback, skipping adding the indication identifier to the target data by using the processing module 1003 based on the mapping relationship; and
sending the target data that does not carry the indication identifier to the network device.

Optionally, the broadcast message may further include a reference condition supporting the ACK/NACK feedback, and the reference condition includes a terminal device reference attribute supporting the ACK/NACK feedback.

Optionally, that the sending module 1002 is configured to send the target data to the network device based on the mapping relationship received by the receiving module 1001 may include:
comparing an attribute of the terminal device with the reference attribute by using the processing module 1003;
if the attribute of the terminal device reaches the reference attribute, adding the indication identifier to the target data by using the processing module 1003 based on the mapping relationship; and
sending the target data that carries the indication identifier to the network device;
or
if the attribute of the terminal device does not reach the reference attribute, skipping adding the indication identifier to the target data by using the processing module 1003 based on the mapping relationship; and
sending the target data that does not carry the indication identifier to the network device.

The foregoing describes the network device in this embodiment of the present invention from a perspective of a modular function entity, and the following describes the network device in this embodiment of the present invention from a perspective of hardware processing.

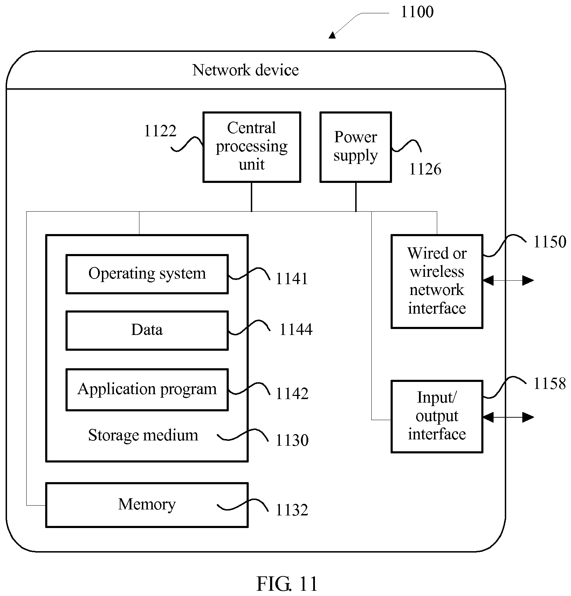

FIG. 11 is a block diagram of hardware in an embodiment of a network device according to an embodiment of the present invention. The network devices 1100 may be relatively different from each other for different configurations or performance. The network device 1100 may include one or more central processing units (central processing units, CPU) 1122 (for example, one or more processors) and memories 1132, and one or more storage application programs 1142 or storage media 1130 of data 1144 (for example, one or more mass storage devices). The memory 1132 and the storage medium 1130 may be transient storage or persistent storage. A program stored in the storage medium 1130 may include one or more modules (not shown in the figure), and each module may include a series of instruction operations on a server. Further, the central processing unit 1122 may be configured to communicate with the storage medium 1130, to execute, on the network device 1100, the series of instruction operations in the storage medium 1130.

The network device 1100 may further include one or more power supplies 1126, one or more wired or wireless network interfaces 1150, one or more input/output interfaces 1158, and/or one or more operating systems 1141 such as Windows Server TM, Mac OS XTM, Unix TM, Linux TM, and Free BSD TM.

Based on a network device structure shown in FIG. 11, for steps performed by the network device in the foregoing embodiment, refer to a corresponding process in the foregoing embodiment, and details are not described herein again.

The foregoing describes the terminal device in this embodiment of the present invention from a perspective of a modular function entity, and the following describes the terminal device in this embodiment of the present invention from a perspective of hardware processing.

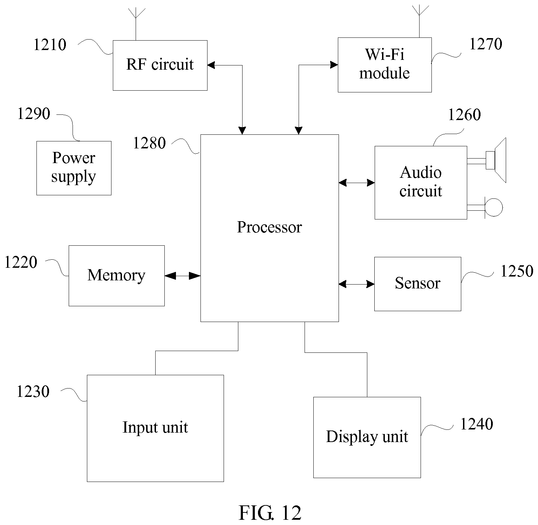

FIG. 12 is a block diagram of hardware in an embodiment of a terminal device according to an embodiment of the present invention. For ease of description, only the part related to the embodiment of the present invention is shown. For technical details that are not disclosed, refer to the method embodiment of the present invention. The terminal device may be any terminal device such as a mobile phone, a tablet computer, a PDA (Personal Digital Assistant, personal digital assistant), a POS (Point of Sales, point of sales), or an in-vehicle computer. For example, the terminal device is the mobile phone.

FIG. 12 shows a block diagram of a partial structure of a mobile phone related to the terminal device provided in this embodiment of the present invention. Referring to FIG. 12, the mobile phone includes components such as a radio frequency (Radio Frequency, RF) circuit 1210, a memory 1220, an input unit 1230, a display unit 1240, a sensor 1250, an audio circuit 1260, a wireless fidelity (wireless fidelity, Wi-Fi) module 1270, a processor 1280, and a power supply 1290.

Based on a terminal device structure shown in FIG. 12, for steps performed by the terminal device in the foregoing embodiment, refer to a corresponding process in the foregoing embodiment, and details are not described herein again.

Persons skilled in the art may understand that the structure of the mobile phone shown in FIG. 12 does not constitute any limitation on the mobile phone. The mobile phone may include components more or fewer than those shown in the figure, or combine some components, or have a different component arrangement.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of the present invention other than limiting the present invention that is defined by the appended claims.

## Claims

1. An unlicensed spectrum ACK/NACK feedback method, comprising:
explicitly or implicitly notifying, by a network device, a terminal device of a mapping relationship, wherein the mapping relationship comprises a mapping relationship between information about target data sent by the terminal device and indication information for feeding back an acknowledgment ACK/negative acknowledgment NACK by the network device; wherein the information about target data comprises a type of an uplink channel on which the target data is transmitted, wherein the uplink channel type comprises a feedback uplink channel for which ACK/NACK feedback is requested and a non-feedback uplink channel for which ACK/NACK feedback is not requested;
receiving, by the network device, the target data sent by the terminal device;
determining, by the network device, the corresponding indication information based on the information about the target data and the mapping relationship;
determining, by the network device, based on the indication information, whether the network device is to feed back the ACK/NACK to the terminal device; and
if it is determined that the network device is to feed back the ACK/NACK to the terminal device, feeding back, by the network device, the ACK/NACK to the terminal device ;
wherein the determining, by the network device, the corresponding indication information based on the information about the target data and the mapping relationship comprises:
determining, by the network device, the type of the uplink channel on which the target data is transmitted; and
determining, by the network device, the corresponding indication information based on the type of the uplink channel on which the target data is transmitted and the mapping relationship.
wherein the determining, by the network device, the corresponding indication information based on the type of the uplink channel on which the target data is transmitted and the mapping relationship comprises:
if the target data is transmitted on the feedback uplink channel, determining, by the network device based on the mapping relationship, that the indication information is feeding back the ACK/NACK to the terminal device; or
if the target data is transmitted on the non-feedback uplink channel, determining, by the network device based on the mapping relationship, that the indication information is not feeding back the ACK/NACK to the terminal device;
wherein the explicitly notifying, by a network device, a terminal device of a mapping relationship comprises:
sending, by the network device, a broadcast message to the terminal device, wherein the broadcast message comprises uplink channel type classification, a physical downlink control channel PDCCH location corresponding to the feedback uplink channel, and the broadcast message carries a mapping relationship between the type of the uplink channel on which the target data is transmitted and the indication information for feeding back the ACK/NACK by the network device;
wherein the broadcast message further comprises a selection condition of the feedback uplink channel, and the selection condition comprises a probability p of selecting the feedback uplink channel or a terminal device reference attribute for selecting the feedback uplink channel.

2. A network device, comprising:
a sending module (901), configured to explicitly or implicitly notify a terminal device of a mapping relationship, wherein the mapping relationship comprises a mapping relationship between information about target data sent by the terminal device and indication information for feeding back ACK/NACK by the network device; wherein the information about target data comprises a type of an uplink channel on which the target data is transmitted, wherein the uplink channel type comprises a feedback uplink channel for which ACK/NACK feedback is requested and a non-feedback uplink channel for which ACK/NACK feedback is not requested;
a receiving module (902), configured to receive the target data sent by the terminal device; and
a processing module (903), configured to determine the corresponding indication information based on the information about the target data that is received by the receiving module and the mapping relationship, wherein
the processing module (903) is further configured to determine, based on the indication information, whether the network device is to feed back the ACK/NACK to the terminal device; and
the sending module (901) is further configured, if it is determined that the network device is to feed back the ACK/NACK to the terminal device, to feed back the ACK/NACK to the terminal device;
wherein that the processing module (903) is configured to determine the corresponding indication information based on the information about the target data that is received by the receiving module (902) and the mapping relationship comprises:
determining the type of the uplink channel on which the target data received by the receiving module (902) is transmitted; and
determining the corresponding indication information based on the type of the uplink channel on which the target data received by the receiving module (902) is transmitted and the mapping relationship;
wherein that the processing module (903) is configured to determine the corresponding indication information based on the type of the uplink channel on which the target data received by the receiving module (902) is transmitted and the mapping relationship comprises:
if the target data is transmitted on the feedback uplink channel, determining, based on the mapping relationship, that the indication information is feeding back the ACK/NACK to the terminal device; or
if the target data is transmitted on the non-feedback uplink channel, determining, based on the mapping relationship, that the indication information is not feeding back the ACK/NACK to the terminal device;
wherein that the sending module (901) is configured to explicitly notify a terminal device of a mapping relationship comprises:
sending a broadcast message to the terminal device, wherein the broadcast message comprises uplink channel type classification, a physical downlink control channel PDCCH location corresponding to the feedback uplink channel, and the broadcast message carries a mapping relationship between the type of the uplink channel on which the target data is transmitted and the indication information for feeding back the ACK/NACK by the network device;
wherein the broadcast message further comprises a selection condition of the feedback uplink channel, and the selection condition comprises a probability p of selecting the feedback uplink channel or a terminal device reference attribute for selecting the feedback uplink channel.

3. A terminal device, comprising:
a receiving module (1001), configured to receive a mapping relationship explicitly or implicitly notified by a network device, wherein the mapping relationship comprises a mapping relationship between information about target data sent by the terminal device and indication information for feeding back ACK/NACK by the network device; wherein the information about target data comprises a type of an uplink channel on which the target data is transmitted, wherein the uplink channel type comprises a feedback uplink channel for which ACK/NACK feedback is requested and a non-feedback uplink channel for which ACK/NACK feedback is not requested;
a sending module (1002), configured to send the target data to the network device based on the mapping relationship received by the receiving module (1001); and
a processing module (1003), configured to: determine the corresponding indication information based on the information about the target data that is sent by the sending module (1002) and the mapping relationship received by the receiving module (1001); wherein
the processing module (1003) is further configured to determine, based on the indication information, whether the network device is to feed back the ACK/NACK to the terminal device; and
further monitor, if it is determined that the network device is to feed back the ACK/NACK to the terminal device, the ACK/NACK fed back by the network device;
wherein that the receiving module (1001) is configured to receive a mapping relationship explicitly notified by a network device comprises:
receiving a broadcast message sent by the network device, wherein the broadcast message comprises uplink channel type classification, a PDCCH location corresponding to a feedback uplink channel, and the broadcast message carries a mapping relationship between the type of the uplink channel on which the target data is transmitted and the indication information for feeding back the ACK/NACK by the network device;
wherein that the sending module (1002) is configured to send the target data to the network device based on the mapping relationship received by the receiving module (1001) comprises:
determining, by using the processing module (1003) based on the received broadcast message, whether the ACK/NACK feedback is needed;
if the terminal device needs the ACK/NACK feedback, determining, by using the processing module (1003) based on the mapping relationship received by the receiving module (1001), that the uplink channel on which the target data is transmitted is the feedback uplink channel; and
transmitting the target data to the network device by using the feedback uplink channel determined by the processing module (1003);
or
if the terminal device does not need the ACK/NACK feedback, determining, by using the processing module (1003) based on the mapping relationship received by the receiving module (1001), that the uplink channel on which the target data is transmitted is the non-feedback uplink channel; and
transmitting the target data to the network device by using the non-feedback uplink channel determined by the processing module (1003);
wherein the broadcast message further comprises a selection condition of the feedback uplink channel, and the selection condition comprises a probability p of selecting the feedback uplink channel or a terminal device reference attribute for selecting the feedback uplink channel.

4. The terminal device according to claim 3, wherein that the sending module (1002) is configured to send the target data to the network device based on the mapping relationship received by the receiving module (1001) comprises:
if the selection condition is p of selecting the feedback uplink channel, randomly selecting a value x from [0,1] by using the processing module (1003);
comparing x with p by using the processing module (1003);
if x<p, determining, by using the processing module (1003) based on the mapping relationship received by the receiving module (1001), that the uplink channel on which the target data is transmitted is the feedback uplink channel; and
transmitting the target data to the network device by using the feedback uplink channel determined by the processing module (1003);
or
if x>=p, determining, by using the processing module (1003) based on the mapping relationship, that the uplink channel on which the target data is transmitted is the non-feedback uplink channel; and
transmitting the target data to the network device by using the non-feedback uplink channel determined by the processing module (1003).

## Patentansprüche

1. Unlizenziertes Spektrum-ACK/NACK-Rückführungsverfahren, umfassend:
explizites oder implizites Benachrichtigen eines Endgeräts durch ein Netzwerkgerät über eine Zuordnungsbeziehung, wobei die Zuordnungsbeziehung eine Zuordnungsbeziehung zwischen von dem Endgerät gesendeten Informationen über Zieldaten und Anzeigeinformationen zur Rückführung einer Bestätigung ACK/negativen Bestätigung NACK durch das Netzwerkgerät umfasst;
wobei die Information über Zieldaten einen Typ eines Uplink-Kanals umfasst, auf dem die Zieldaten übertragen werden, wobei der Uplink-Kanaltyp einen Rückführungs-Uplink-Kanal, für den eine ACK/NACK-Rückführung angefordert wird, und einen Uplink-Kanal ohne Rückführung umfasst, für den keine ACK/NACK-Rückführung angefordert wird;
Empfangen, durch das Netzwerkgerät, der vom Endgerät gesendeten Zieldaten;
Bestimmen, durch das Netzwerkgerät, der entsprechenden Anzeigeinformation, basierend auf den Informationen über die Zieldaten und die Zuordnungsbeziehung;
Bestimmen, durch das Netzwerkgerät, basierend auf der Anzeigeinformation, ob das Netzwerkgerät die ACK/NACK an das Endgerät zurückführen soll; und
wenn bestimmt wird, dass das Netzgerät die ACK/NACK an das Endgerät zurückführen soll, Rückführen, durch das Netzwerkgerät, der ACK/NACK an das Endgerät;
wobei das Bestimmen, durch das Netzwerkgerät, der entsprechenden Anzeigeinformation, basierend auf den Informationen über die Zieldaten und die Zuordnungsbeziehung, umfasst:
Bestimmen, durch das Netzwerkgerät, des Typs des Uplink-Kanals, auf dem die Zieldaten übertragen werden; und
Bestimmen, durch das Netzwerkgerät, der entsprechenden Anzeigeinformation auf der Grundlage des Typs des Uplink-Kanals, auf dem die Zieldaten übertragen werden, und der Zuordnungsbeziehung, wobei das Bestimmen, durch das Netzwerkgerät, der entsprechenden Anzeigeinformation auf der Grundlage des Typs des Uplink-Kanals, auf dem die Zieldaten übertragen werden, und der Zuordnungsbeziehung umfasst:
wenn die Zieldaten auf dem Rückführungs-Uplink-Kanal übertragen werden, Bestimmen, durch das Netzwerkgerät auf der Grundlage der Zuordnungsbeziehung, dass die Anzeigeinformation die ACK/NACK an das Endgerät zurückführt; oder
wenn die Zieldaten auf dem Nicht-Rückführungs-Uplink-Kanal übertragen werden, Bestimmen, durch das Netzwerkgerät auf der Grundlage der Zuordnungsbeziehung, dass die Anzeigeinformation die ACK/NACK nicht an das Endgerät zurückführt;
wobei das explizite Benachrichtigen, durch ein Netzwerkgerät, eines Endgerätes über eine Zuordnungsbeziehung umfasst:
Senden, durch das Netzwerkgerät, einer Broadcast-Nachricht an das Endgerät, wobei die Broadcast-Nachricht eine Uplink-Kanaltyp-Klassifizierung, eine physische Downlink-Steuerkanal-PDCCH-Position, die dem Rückführungs-Uplink-Kanal entspricht, umfasst, und wobei die Broadcast-Nachricht eine Zuordnungsbeziehung zwischen dem Typ des Uplink-Kanals, auf dem die Zieldaten übertragen werden, und der Anzeigeinformation zur Rückführung des ACK/NACK durch das Netzwerkgerät enthält;
wobei die Broadcast-Nachricht ferner eine Auswahlbedingung des Rückführungs-Uplink-Kanals umfasst, und wobei die Auswahlbedingung eine Wahrscheinlichkeit p der Auswahl des Rückführungs-Uplink-Kanals oder ein Endgeräte-Referenzattribut zur Auswahl des Rückführungs-Uplink-Kanals umfasst.

2. Netzwerkgerät, umfassend:
ein Sendemodul (901), das konfiguriert ist, um ein Endgerät durch ein Netzwerkgerät über eine Zuordnungsbeziehung explizit oder implizit zu benachrichtigen, wobei die Zuordnungsbeziehung eine Zuordnungsbeziehung zwischen von dem Endgerät gesendeten Informationen über Zieldaten und Anzeigeinformationen zur Rückführung von ACK/NACK durch das Netzwerkgerät umfasst;
wobei die Information über Zieldaten einen Typ eines Uplink-Kanals umfasst, auf dem die Zieldaten übertragen werden, wobei der Uplink-Kanaltyp einen Rückführungs-Uplink-Kanal, für den eine ACK/NACK-Rückführung angefordert wird, und einen Uplink-Kanal ohne Rückführung umfasst, für den keine ACK/NACK-Rückführung angefordert wird;
ein Empfangsmodul (902), das konfiguriert ist, um die vom Endgerät gesendeten Zieldaten zu empfangen; und
ein Verarbeitungsmodul (903), das konfiguriert ist, um die entsprechenden Anzeigeinformationen auf der Grundlage der Informationen über die Zieldaten, die von dem Empfangsmodul empfangen werden, und der Zuordnungsbeziehung zu bestimmen, wobei das Verarbeitungsmodul (903) ferner konfiguriert ist, um auf der Grundlage der Anzeigeinformationen zu bestimmen, ob das Netzwerkgerät die ACK/NACK zu dem Endgerät zurückführen soll; und
wobei das Sendemodul (901) ferner so konfiguriert ist, dass es, wenn bestimmt wird, dass das Netzwerkgerät die ACK/NACK an das Endgerät zurückführen soll, die ACK/NACK an das Endgerät zurückführt;
wobei das Verarbeitungsmodul (903) konfiguriert ist, die entsprechenden Anzeigeinformationen auf der Grundlage der Informationen über die Zieldaten zu bestimmen, die von dem Empfangsmodul (902) empfangen werden, und wobei die Zuordnungsbeziehung umfasst:
Bestimmen des Typs des Uplink-Kanals, auf dem die vom Empfangsmodul (902) empfangenen Zieldaten übertragen werden; und
Bestimmen der entsprechenden Anzeigeinformationen auf der Grundlage des Typs des Uplink-Kanals, auf dem die vom Empfangsmodul (902) empfangenen Zieldaten übertragen werden, und der Zuordnungsbeziehung;
wobei das Verarbeitungsmodul (903) konfiguriert ist, um die entsprechenden Anzeigeinformationen basierend auf dem Typ des Uplink-Kanals zu bestimmen, auf dem die von dem Empfangsmodul (902) empfangenen Zieldaten übertragen werden, und wobei die Zuordnungsbeziehung umfasst:
wenn die Zieldaten auf dem Rückführungs-Uplink-Kanal übertragen werden, Bestimmen, auf der Grundlage der Zuordnungsbeziehung, dass die Anzeigeinformation die ACK/NACK an das Endgerät zurückführt; oder
wenn die Zieldaten auf dem Nicht-Rückführungs-Uplink-Kanal übertragen werden, Bestimmen, auf der Grundlage der Zuordnungsbeziehung, dass die Anzeigeinformation die ACK/NACK an das Endgerät nicht zurückführt;
wobei das Sendemodul (901) konfiguriert ist, ein Endgerät explizit über eine Zuordnungsbeziehung zu benachrichtigen, umfassend:
Senden einer Broadcast-Nachricht an das Endgerät, wobei die Broadcast-Nachricht eine Uplink-Kanaltyp-Klassifizierung, eine physische Downlink-Steuerkanal-PDCCH-Position, die dem Rückführungs-Uplink-Kanal entspricht, umfasst, und wobei die Broadcast-Nachricht eine Zuordnungsbeziehung zwischen dem Typ des Uplink-Kanals, auf dem die Zieldaten übertragen werden, und der Anzeigeinformation zur Rückführung des ACK/NACK durch das Netzwerkgerät enthält;
wobei die Broadcast-Nachricht ferner eine Auswahlbedingung des Rückführungs-Uplink-Kanals umfasst, und wobei die Auswahlbedingung eine Wahrscheinlichkeit p der Auswahl des Rückführungs-Uplink-Kanals oder ein Endgeräte-Referenzattribut zur Auswahl des Rückführungs-Uplink-Kanals umfasst.

3. Endgerät, umfassend:
ein Empfangsmodul (1001), das konfiguriert ist, um eine Zuordnungsbeziehung zu empfangen, die explizit oder implizit von einem Netzwerkgerät mitgeteilt wird, wobei die Zuordnungsbeziehung eine Zuordnungsbeziehung zwischen Informationen über Zieldaten, die von dem Endgerät gesendet werden, und Anzeigeinformationen zur Rückführung von ACK/NACK durch das Netzwerkgerät umfasst;
wobei die Information über Zieldaten einen Typ eines Uplink-Kanals umfasst, auf dem die Zieldaten übertragen werden, wobei der Uplink-Kanaltyp einen Rückführungs-Uplink-Kanal, für den eine ACK/NACK-Rückführung angefordert wird, und einen Uplink-Kanal ohne Rückführung umfasst, für den keine ACK/NACK-Rückführung angefordert wird;
ein Sendemodul (1002), das konfiguriert ist, die Zieldaten an das Netzwerkgerät auf der Grundlage der von dem Empfangsmodul (1001) empfangenen Zuordnungsbeziehung zu senden; und
ein Verarbeitungsmodul (1003), das für folgende Zwecke konfiguriert ist:
Bestimmen der entsprechenden Anzeigeinformationen auf der Grundlage der Informationen über die Zieldaten, die vom Sendemodul (1002) gesendet werden, und der vom Empfangsmodul (1001) empfangenen Zuordnungsbeziehung;
wobei das Verarbeitungsmodul (1003) ferner konfiguriert ist, um auf der Grundlage der Anzeigeinformation zu bestimmen, ob das Netzwerkgerät die ACK/NACK an das Endgerät zurückführen soll; und
ferner, wenn bestimmt wird, dass das Netzwerkgerät die ACK/NACK zum Endgerät zurückführen soll, Überwachen der ACK/NACK, die vom Netzwerkgerät zurückgeführt wird;
wobei das Empfangsmodul (1001) konfiguriert ist, um eine Zuordnungsbeziehung zu empfangen, die von einem Netzwerkgerät explizit mitgeteilt wird, umfassend:
Empfangen einer von dem Netzwerkgerät gesendeten Broadcast-Nachricht, wobei die Broadcast-Nachricht eine Uplink-Kanaltyp-Klassifizierung, eine PDCCH-Position, die einem Rückführungs-Uplink-Kanal entspricht, umfasst, und wobei die Broadcast-Nachricht eine Zuordnungsbeziehung zwischen dem Typ des Uplink-Kanals, auf dem die Zieldaten übertragen werden, und der Anzeigeinformation zur Rückführung des ACK/NACK durch das Netzwerkgerät enthält;
wobei das Sendemodul (1002) konfiguriert ist, die Zieldaten an das Netzwerkgerät auf der Grundlage der von dem Empfangsmodul (1001) empfangenen Zuordnungsbeziehung zu senden, umfassend:
Bestimmen, unter Verwendung des Verarbeitungsmoduls (1003) auf der Grundlage der empfangenen Broadcast-Nachricht, ob die ACK/NACK-Rückführung erforderlich ist;
wenn das Endgerät die ACK/NACK-Rückführung benötigt, Bestimmen unter Verwendung des Verarbeitungsmoduls (1003) auf der Grundlage der von dem Empfangsmodul (1001) empfangenen Zuordnungsbeziehung, dass der Uplink-Kanal, auf dem die Zieldaten übertragen werden, der Rückführungs-Uplink-Kanal ist; und
Übertragen der Zieldaten an das Netzwerkgerät unter Verwendung des Rückführungs-Uplink-Kanals, der durch das Verarbeitungsmodul (1003) bestimmt wird; oder
wenn das Endgerät keine ACK/NACK-Rückführung benötigt, Bestimmen unter Verwendung des Verarbeitungsmoduls (1003) auf der Grundlage der von dem Empfangsmodul (1001) empfangenen Zuordnungsbeziehung, dass der Uplink-Kanal, auf dem die Zieldaten übertragen werden, der Nicht-Rückführungs-Uplink-Kanal ist; und
Übertragen der Zieldaten an das Netzwerkgerät unter Verwendung des Nicht-Rückführungs-Uplink-Kanals, der durch das Verarbeitungsmodul (1003) bestimmt wird;
wobei die Broadcast-Nachricht ferner eine Auswahlbedingung des Rückführungs-Uplink-Kanals umfasst, und wobei die Auswahlbedingung eine Wahrscheinlichkeit p der Auswahl des Rückführungs-Uplink-Kanals oder ein Endgeräte-Referenzattribut zur Auswahl des Rückführungs-Uplink-Kanals umfasst.

4. Endgerät nach Anspruch 3, wobei das Sendemodul (1002) konfiguriert ist, die Zieldaten an das Netzwerkgerät auf der Grundlage der von dem Empfangsmodul (1001) empfangenen Zuordnungsbeziehung zu senden, umfassend:
wenn die Auswahlbedingung p der Auswahl des Rückführungs-Uplink-Kanals ist, zufälliges Auswählen eines Wertes x aus [0,1] unter Verwendung des Verarbeitungsmoduls (1003);
Vergleichen von x mit p unter Verwendung des Verarbeitungsmoduls (1003);
wenn x<p, Bestimmen unter Verwendung des Verarbeitungsmoduls (1003) auf der Grundlage der von dem Empfangsmodul (1001) empfangenen Zuordnungsbeziehung, dass der Uplink-Kanal, auf dem die Zieldaten übertragen werden, der Rückführungs-Uplink-Kanal ist; und
Übertragen der Zieldaten an das Netzwerkgerät unter Verwendung des Rückführungs-Uplink-Kanals, der durch das Verarbeitungsmodul (1003) bestimmt wird; oder
wenn x>=p, Bestimmen, unter Verwendung des Verarbeitungsmoduls (1003) auf der Grundlage der Zuordnungsbeziehung, dass der Uplink-Kanal, auf dem die Zieldaten übertragen werden, der Nicht-Rückführungs-Uplink-Kanal ist; und
Übertragen der Zieldaten an das Netzwerkgerät unter Verwendung des Nicht-Rückführungs-Uplink-Kanals, der durch das Verarbeitungsmodul (1003) bestimmt wird.

## Revendications

1. Procédé de rétroaction ACK/NACK sous spectre hors licence, comprenant :
la notification explicite ou implicite, par un dispositif de réseau, d'un dispositif terminal d'une relation de mappage, la relation de mappage comprenant une relation de mappage entre des informations concernant les données cibles envoyées par le dispositif terminal et des informations d'indication permettant au dispositif de réseau de renvoyer un accusé de réception (ACK)/accusé de réception négatif (NACK) ;
les informations concernant les données cibles comprenant un type de canal de liaison montante sur lequel les données cibles sont transmises, le type de canal de liaison montante comprenant un canal de liaison montante de rétroaction pour lequel une rétroaction ACK/NACK est demandée, et un canal de liaison montante sans rétroaction pour lequel une rétroaction ACK/NACK n'est pas demandée ;
la réception, par le dispositif de réseau, des données cibles envoyées par le dispositif terminal ;
la détermination, par le dispositif de réseau, des informations d'indication correspondantes en fonction des informations concernant les données cibles et la relation de mappage ;
la détermination, par le dispositif de réseau en fonction des informations d'indication, consistant à savoir si le dispositif de réseau doit renvoyer l'ACK/NACK au dispositif terminal ; et
le renvoi, par le dispositif de réseau, de l'ACK/NACK au dispositif terminal s'il est déterminé que le dispositif de réseau doit renvoyer l'ACK/NACK au dispositif terminal ;
la détermination, par le dispositif de réseau, des informations d'indication correspondantes en fonction des informations concernant les données cibles et la relation de mappage comprenant :
la détermination, par le dispositif de réseau, du type de canal de liaison montante sur lequel les données cibles sont transmises ; et
la détermination, par le dispositif de réseau, des informations d'indication correspondantes en fonction du type de canal de liaison montante sur lequel les données cibles sont transmises et de la relation de mappage, la détermination, par le dispositif de réseau, des informations d'indication correspondantes en fonction du type du canal de liaison montante sur lequel les données cibles sont transmises et de la relation de mappage comprenant :
la détermination, par le dispositif de réseau en fonction de la relation de mappage, selon laquelle les informations d'indication renvoient l'ACK/NACK au dispositif terminal, si les données cibles sont transmises sur le canal de liaison montante de rétroaction ; ou
la détermination, par le dispositif de réseau en fonction de la relation de mappage, selon laquelle les informations d'indication ne renvoient pas l'ACK/NACK au dispositif terminal, si les données cibles sont transmises sur le canal de liaison montante sans rétroaction ;
la notification explicite, par un dispositif de réseau, d'un dispositif terminal d'une relation de mappage comprenant :
l'envoi, par le dispositif de réseau, d'un message de diffusion au dispositif terminal, le message de diffusion comprenant une classification de type de canal de liaison montante, un emplacement de canal physique de commande de liaison descendante (PDCCH) correspondant au canal de liaison montante de rétroaction, et le message de diffusion comportant une relation de mappage entre le type du canal de liaison montante sur lequel les données cibles sont transmises et les informations d'indication permettant au dispositif de réseau de renvoyer l'ACK/NACK ;
le message de diffusion comprenant en outre une condition de sélection du canal de liaison montante de rétroaction, et la condition de sélection comprenant une probabilité p de sélection du canal de liaison montante de rétroaction ou un attribut de référence de dispositif terminal permettant de sélectionner le canal de liaison montante de rétroaction.

2. Dispositif de réseau, comprenant :
un module d'envoi (901), configuré pour notifier explicitement ou implicitement un dispositif terminal d'une relation de mappage, la relation de mappage comprenant une relation de mappage entre des informations concernant les données cibles envoyées par le dispositif terminal et des informations d'indication permettant au dispositif de réseau de renvoyer l'ACK/NACK ;
les informations concernant les données cibles comprenant un type de canal de liaison montante sur lequel les données cibles sont transmises, le type de canal de liaison montante comprenant un canal de liaison montante de rétroaction pour lequel une rétroaction ACK/NACK est demandée, et un canal de liaison montante sans rétroaction pour lequel une rétroaction ACK/NACK n'est pas demandée ;
un module de réception (902) configuré pour recevoir les données cibles envoyées par le dispositif terminal ; et
un module de traitement (903) configuré pour déterminer les informations d'indication correspondantes en fonction des informations concernant les données cibles reçues par le module de réception et de la relation de mappage, le module de traitement (903) étant en outre configuré pour déterminer, en fonction des informations d'indication, consistant à savoir si le dispositif de réseau doit renvoyer l'ACK/NACK au dispositif terminal ; et
le module d'envoi (901) étant en outre configuré, s'il est déterminé que le dispositif de réseau doit renvoyer l'ACK/NACK au dispositif terminal, pour renvoyer le ACK/NACK au dispositif terminal ;
le module de traitement (903) étant configuré pour déterminer les informations d'indication correspondantes en fonction des informations concernant les données cibles reçues par le module de réception (902) et la relation de mappage, ladite détermination comprenant :
la détermination du type du canal de liaison montante sur lequel les données cibles reçues par le module de réception (902) sont transmises ; et
la détermination des informations d'indication correspondantes en fonction du type du canal de liaison montante sur lequel les données cibles reçues par le module de réception (902) sont transmises, et de la relation de mappage ;
le module de traitement (903) étant configuré pour déterminer les informations d'indication correspondantes en fonction du type du canal de liaison montante sur lequel les données cibles reçues par le module de réception (902) sont transmises et la relation de mappage, ladite détermination comprenant :
la détermination, en fonction de la relation de mappage, selon laquelle les informations d'indication renvoient l'ACK/NACK au dispositif terminal, si les données cibles sont transmises sur le canal de liaison montante de rétroaction ; ou
la détermination, en fonction de la relation de mappage, selon laquelle les informations d'indication ne renvoient pas l'ACK/NACK au dispositif terminal, si les données cibles sont transmises sur le canal de liaison montante sans rétroaction ;
le module d'envoi (901) étant configuré pour notifier explicitement un dispositif terminal d'une relation de mappage, ladite notification comprenant :
l'envoi d'un message de diffusion au dispositif terminal, le message de diffusion comprenant une classification de type de canal de liaison montante, un emplacement de canal physique de commande de liaison descendante (PDCCH) correspondant au canal de liaison montante de rétroaction, et le message de diffusion comportant une relation de mappage entre le type du canal de liaison montante sur lequel les données cibles sont transmises et les informations d'indication permettant au dispositif de réseau de renvoyer l'ACK/NACK ;
le message de diffusion comprenant en outre une condition de sélection du canal de liaison montante de rétroaction, et la condition de sélection comprenant une probabilité p de sélection du canal de liaison montante de rétroaction ou un attribut de référence de dispositif terminal permettant de sélectionner le canal de liaison montante de rétroaction.

3. Dispositif terminal, comprenant:
un module de réception (1001) configuré pour recevoir une relation de mappage notifiée explicitement ou implicitement par un dispositif de réseau, la relation de mappage comprenant une relation de mappage entre des informations concernant les données cibles envoyées par le dispositif terminal et des informations d'indication permettant au dispositif de réseau de renvoyer l'ACK/NACK ;
les informations concernant les données cibles comprenant un type de canal de liaison montante sur lequel les données cibles sont transmises, le type de canal de liaison montante comprenant un canal de liaison montante de rétroaction pour lequel une rétroaction ACK/NACK est demandée, et un canal de liaison montante sans rétroaction pour lequel une rétroaction ACK/NACK n'est pas demandée ;
un module d'envoi (1002) configuré pour envoyer les données cibles au dispositif de réseau en fonction de la relation de mappage reçue par le module de réception (1001) ; et
un module de traitement (1003) configuré pour :
déterminer les informations d'indication correspondantes en fonction des informations concernant les données cibles envoyées par le module d'envoi (1002) et de la relation de mappage reçue par le module de réception (1001) ;
le module de traitement (1003) étant en outre configuré pour déterminer, en fonction des informations d'indication, si le dispositif de réseau doit renvoyer l'ACK/NACK au dispositif terminal ; et
surveiller en outre, s'il est déterminé que le dispositif de réseau doit renvoyer l'ACK/NACK au dispositif terminal, le ACK/NACK renvoyé par le dispositif de réseau ;
le module de réception (1001) étant configuré pour recevoir une relation de mappage explicitement notifiée par un dispositif de réseau, la notification comprenant :
la réception d'un message de diffusion envoyé par le dispositif de réseau, le message de diffusion comprenant une classification de type de canal de liaison montante, un emplacement de PDCCH correspondant à un canal de liaison montante de rétroaction, et le message de diffusion comportant une relation de mappage entre le type du canal de liaison montante sur lequel les données cibles sont transmises et les informations d'indication permettant au dispositif de réseau de renvoyer l'ACK/NACK ;
le module d'envoi (1002) étant configuré pour envoyer les données cibles au dispositif de réseau en fonction de la relation de mappage reçue par le module de réception (1001), ledit envoi comprenant :
la détermination, en utilisant le module de traitement (1003) en fonction du message de diffusion reçu, consistant à savoir si la rétroaction ACK/NACK est nécessaire ;
la détermination, en utilisant le module de traitement (1003) en fonction de la relation de mappage reçue par le module de réception (1001), si le dispositif terminal a besoin de la rétroaction ACK/NACK, selon laquelle le canal de liaison montante sur lequel les données cibles sont transmises est le canal de liaison montante de rétroaction ; et
la transmission des données cibles au dispositif de réseau en utilisant le canal de liaison montante de rétroaction déterminé par le module de traitement (1003) ; ou
la détermination, en utilisant le module de traitement (1003) en fonction de la relation de mappage reçue par le module de réception (1001), si le dispositif terminal n'a pas besoin de la rétroaction ACK/NACK, selon laquelle le canal de liaison montante sur lequel les données cibles sont transmises est le canal de liaison montante sans rétroaction ; et
la transmission des données cibles au dispositif de réseau en utilisant le canal de liaison montante sans rétroaction déterminé par le module de traitement (1003) ;
le message de diffusion comprenant en outre une condition de sélection du canal de liaison montante de rétroaction, et la condition de sélection comprenant une probabilité p de sélection du canal de liaison montante de rétroaction ou un attribut de référence de dispositif terminal permettant de sélectionner le canal de liaison montante de rétroaction.

4. Dispositif terminal selon la revendication 3, dans lequel le module d'envoi (1002) étant configuré pour envoyer les données cibles au dispositif de réseau en fonction de la relation de mappage reçue par le module de réception (1001), ledit envoi comprenant :
la sélection aléatoire, si la condition de sélection est p pour la sélection du canal de liaison montante de rétroaction, d'une valeur x parmi [0,1] en utilisant le module de traitement (1003) ;
la comparaison de x à p en utilisant le module de traitement (1003) ;
la détermination, si x < p, en utilisant le module de traitement (1003) en fonction de la relation de mappage reçue par le module de réception (1001), selon laquelle le canal de liaison montante sur lequel les données cibles sont transmises est le canal de liaison montante de rétroaction ; et
la transmission des données cibles au dispositif de réseau en utilisant le canal de liaison montante de rétroaction déterminé par le module de traitement (1003) ; ou
la détermination, si x >= p, en utilisant le module de traitement (1003) en fonction de la relation de mappage, selon laquelle le canal de liaison montante sur lequel les données cibles sont transmises est le canal de liaison montante sans rétroaction ; et
la transmission des données cibles au dispositif de réseau en utilisant le canal de liaison montante sans rétroaction déterminé par le module de traitement (1003).
